(19) Europäisches Patentamt
European Patent Office
Office européen des brevets

(11) EP 2 108 680 B1

(12) EUROPEAN PATENT SPECIFICATION

(45) Date of publication and mention of the grant of the patent:
**04.05.2011 Bulletin 2011/18**

(51) Int Cl.:
***C08L 33/00*** *(2006.01)*

(21) Application number: **09156863.4**

(22) Date of filing: **31.03.2009**

# (54) Acrylic resin composition and molded product using the same

Acrylharzzusammensetzung und daraus geformtes Produkt

Composition de résine acrylique et produit moulé l'utilisant

(84) Designated Contracting States:
**DE FR GB**

(30) Priority: **12.04.2008 JP 2008104166**

(43) Date of publication of application:
**14.10.2009 Bulletin 2009/42**

(73) Proprietors:
- **Mitsubishi Gas Chemical Company, Inc.**
  **Tokyo 100-8324 (JP)**
- **MGC Filsheet Co., Ltd.**
  **Tokorozawa-shi**
  **Saitama 359-1164 (JP)**

(72) Inventors:
- **Ogawa, Noriyoshi**
  **Ibaraki 314-0102 (JP)**
- **Kanagawa, Tatsuya**
  **Osaka 561-0823 (JP)**

(74) Representative: **HOFFMANN EITLE**
**Patent- und Rechtsanwälte**
**Arabellastraße 4**
**81925 München (DE)**

(56) References cited:
**EP-A- 0 263 378**
**WO-A-98/54242**
**DE-A1-102004 059 243**
**US-A1- 2003 092 864**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an acrylic resin composition comprising a terminal silicone-modified polycarbonate resin. In addition, the present invention relates to a molded product using said acrylic resin composition such as a film, a sheet and a multilayer sheet in combination with other resins having excellent releasability and low friction, and relates to a process of producing the same.

### Background Art

Acrylic resins are used in various fields such as an optical lens, a protection material for a liquid crystal panel and an aquarium because of their excellent transparency and scratch resistance. Particularly, they are commonly used for a hard coat for coating on other resins because of their excellent surface hardness and scratch resistance. Especially, a resin laminate such as a multilayer sheet in combination with polycarbonate having excellent transparency and high impact resistance is extraordinarily suitable in the field wherein high abrade resistance and high impact resistance are required such as various types of windowpanes, transparent roof covers and transparent paneling, and therefore it is in high demand.

Examples of known methods for laminating an acrylic resin with a polycarbonate resin include (1) a method of co-extrusion of a polycarbonate resin and an acrylic resin to form a multilayer sheet and (2) a method of coating an acrylic resin monomer on a polycarbonate resin sheet substrate and subsequently curing the coating layer by light or heat. Of the two methods, the method (1) has been commonly used in these days for the reason that the method (2) has problems such as pollution of working environment and complicated management of coating and/or curing devices caused by the volatilization of an acrylic monomer. However, the method (1) also has problems that the acrylic resin would not be released with ease from the sheet molding roll at the time of co-extrusion, which would occasionally cause deterioration in moldability and appearance.

In order to solve the above problems, use of acrylic resin compositions comprising various lubricants is proposed (see Patent Document 1 and Patent Document 2). Though these methods using lubricants such as fatty acid esters and fatty acid amides may improve roll releasing properties, it may cause other problems such as accumulation of lubricants on the roll and whitening under the environment of high temperature and high humidity, and therefore further improvements are required.

Meanwhile, it is known to use a modified polycarbonate resin having a silicone structure in its main chain (see Patent Document 3). Since the modified polycarbonate resin is a polymer having a high molecular weight, the problems caused by volatilization can be solved. However, releasability thereof is not necessarily satisfactory and thus further improvements are expected.

Patent Document 1: Jpn. Pat. Laid-Open Publication No. 2005-225018
Patent Document 4: Jpn. Pat. Laid-Open Publication No. 2006-205478
Patent Document 4: Jpn. Pat. Laid-Open Publication No. H05-200827

### Disclosure of the Invention

### Problems to be Solved by the Invention

The problem to be solved by the present invention is to solve the above-mentioned conventional problem and to provide an acrylic resin composition which can remarkably improve releasability from a molding roll at the time of producing an acrylic resin sheet. Particularly, the problem to be solved by the present invention is to provide an acrylic resin/polycarbonate resin multilayer sheet which is improved in releasability of an acrylic resin from a molding roll at the time of producing a multilayer sheet of a polycarbonate resin and an acrylic resin with low accumulation of lubricants on the roll and with high environmental stability wherein an excellent appearance can be maintained even under the environment of high temperature and high humidity, and an acrylic resin composition which can form said multilayer sheet.

### Means for Solving the Problems

The inventors of the present invention paid intensive research efforts to dissolve the above-mentioned problems by searching a new lubricant for an acrylic resin composition, especially a lubricant suitable for an acrylic resin composition for laminating with a polycarbonate resin and, as a result, they found that a specific terminal silicone-modified polycarbonate resin can be a lubricant having an excellent mold releasability, excellent stability under high temperature and high humidity and low roll accumulation, and thus completed the present invention.

Thus, the present invention relates to an acrylic resin composition, a process for producing the same, a molded product and a multilayer laminate formed of the same and a process for producing the same shown below.

1) An acrylic resin composition comprising an acrylic resin as a main component and a terminal-modified polycarbonate resin having terminal groups represented by the following general formula (1):

[Chemical Formula 6]

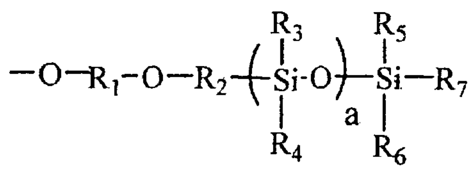 (1)

wherein each of $R_1$ to $R_2$ independently represents an alkylene group having 1-20 carbon atoms, each of $R_3$ to $R_7$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "a" represents an integer of 1 to 1000.

2) The acrylic resin composition according to 1), wherein the content of said terminal-modified polycarbonate resin is 0.1 to 15% by weight based upon the total amount of the acrylic resin composition.

3) The acrylic resin composition according to 1) or 2), wherein said terminal-modified polycarbonate resin has the intrinsic viscosity of 0.05 to 1.0 dl/g.

4) The acrylic resin composition according to any one of 1) to 3), wherein each of $R_3$ to $R_7$ in said general formula (1) independently represents a methyl group, a butyl group or a phenyl group.

5) The acrylic resin composition according to any one of 1) to 4), wherein each of $R_1$ to $R_2$ in said general formula (1) independently represents an alkylene group having 1-6 carbon atoms.

6) The acrylic resin composition according to any one of 1) to 5), wherein "a" in said general formula (1) represents an integer of 4 to 100.

7) The acrylic resin composition according to any one of 1) to 6), wherein said terminal-modified polycarbonate resin has recurring units represented by the following general formula (2):

[Chemical Formula 7]

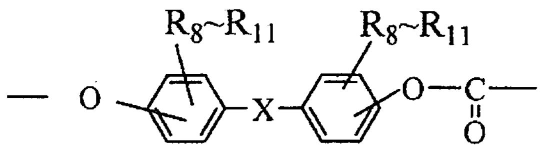

(2)

wherein each of $R_8$ to $R_{11}$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "X" represents a group selected from the group consisting of the following divalent organic groups represented by the following formulae:

[Chemical Formula 8]

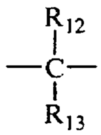 , $-S-$ , $-(CH_2)_b-$ , $-O-$ , $-SO-$ , $-CO-$ , $-SO_2-$ ,

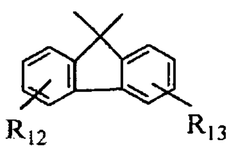 , 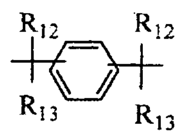 , 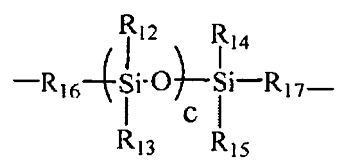

wherein each of $R_{12}$ to $R_{15}$ independently represents a hydrogen atom, a fluorine atom, a chlorine atom, a bromine atom, an iodine atom, an alkyl group having 1-9 carbon atoms, an alkoxy group having 1-5 carbon atoms, an aryl group having 6-12 carbon atoms or a group wherein $R_{12}$ to $R_{15}$ are combined with each other to form a carbocyclic ring or a heterocyclic ring, each of $R_{16}$ to $R_{17}$ independently represents an alkylene group having 1-20 carbon atoms, "b" represents an integer of 0 to 20 and "c" represents an integer of 1 to 1000.

8) The acrylic resin composition according to 7), wherein said recurring units represented by the general formula (2) are derived from 2,2-bis(4-hydroxyphenyl)propane, 1,1-bis(4-hydroxyphenyl)cyclohexane, 1,1-bis(4-hydroxy-3-methylphenyl)cyclohexane, 2,2-bis(4-hydroxy-3-methyphenyl)propane, 1,1-bis(4-hydroxyphenyl)ethane, bis(4-hydroxyphenyl)methane, or 1,1'-biphenyl-4,4'-diol.

9) The acrylic resin composition according to 7) or 8), wherein the average degree of polymerization of said recurring units represented by the general formula (2) is 7 to 200.

10) The acrylic resin composition according to any one of 1) to 9), wherein said acrylic resin is derived from monomers containing as a main component an acrylic monomer selected from the group consisting of acrylic acids, acrylates and methacrylates.

11) The acrylic resin composition according to 10), wherein said acrylic resin is a polymethylmethacrylate copolymer.

12) The acrylic resin composition according to any one of 1) to 11), characterized in that it further comprises fatty acid amides and/or higher alcohols.

13) A molded product obtained by molding the acrylic resin composition according to any one of 1) to 12).
14) The molded product according to 13), which is a film or a sheet.

15) A multilayer laminate comprising at least a layer formed of the acrylic resin composition according to any one of 1) to 12) and a layer formed of other resins.

16) The multilayer laminate according to 15), which is a polycarbonate resin laminated body wherein a polycarbonate resin is used as said other resins and a layer formed of said acrylic resin composition is laminated to one side or both sides of the layer formed of said polycarbonate resin.

17) The multilayer laminate according to 15) or 16), characterized in that it further comprises a hard coat layer.
18) A process for producing the acrylic resin composition according to any one of 1) to 12), which comprises a step of mixing an acrylic monomer with a terminal-modified polycarbonate resin having terminal groups represented by the following general formula (1), and subsequently polymerizing said acrylic monomer by heating or light irradiation:

[Chemical Formula 9]

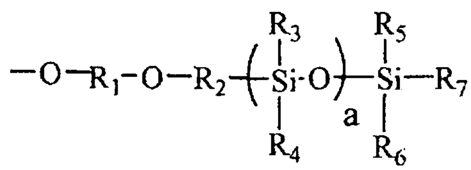
(1)

wherein each of $R_1$ to $R_2$ independently represents an alkylene group having 1-20 carbon atoms, each of $R_3$ to $R_7$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "a" represents an integer of 1 to 1000.

19) A process for producing a multilayer laminate comprising at least a layer formed of the acrylic resin composition according to any one of 1) to 12) and a layer formed of other resins, which comprises a step wherein the resin forming the layer of other resins is molded by co-extrusion molding with said acrylic resin composition.

20) A process for producing a multilayer laminate comprising at least a layer formed of the acrylic resin composition according to any one of 1) to 12) and a layer formed of other resins, which comprises a step of coating on the surface of the layer formed of other resins a mixture of an acrylic monomer with a terminal-modified polycarbonate resin having terminal groups represented by the following general formula (1), and subsequently polymerizing said acrylic monomer contained in the mixture by heating or light irradiation:

[Chemical Formula 10]

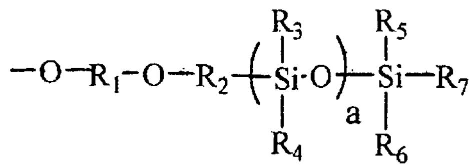

(1)

wherein each of $R_1$ to $R_2$ independently represents an alkylene group having 1-20 carbon atoms, each of $R_3$ to $R_7$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "a" represents an integer of 1 to 1000.

**Effects of the Invention**

The terminal-modified polycarbonate resin comprised in the acrylic resin composition of the present invention has lower volatility than conventional lubricants for an acrylic resin because of its high molecular weight. In addition, since the polycarbonate resin has polysiloxane groups at the terminal, it has high degree of freedom and of polysiloxane groups and has unexpectedly high slidability on the surface of the resin compared with a modified polycarbonate resin having silicone structures in the main chain, and therefore an excellent lubricating effect can be obtained by a small amount.

Therefore, the acrylic resin composition comprising suchlike terminal-modified polycarbonate resin can exhibit an excellent roll releasability without accompanying a roll pollution (accumulation of lubricants on the roll) or deterioration of slidability by volatilization and/or heavy use of lubricants.

The molded product formed of this acrylic resin composition would not be whitened with ease even under the environment of high temperature and high humidity, and can maintain excellent slidability.

Particularly, in case when the acrylic resin composition is molded by a co-extrusion molding with a polycarbonate resin to form a multilayer laminate, the polycarbonate resin laminated body thus obtained can maintain an excellent appearance without whitening under the environment of high temperature and high humidity, since the acrylic resin layer is improved in roll releasability and the amount of adhered substances on the roll is remarkably reduced. Therefore, the acrylic resin composition of the present invention is suitable for utilizing in the field wherein scratch resistance and impact resistance are required such as various types of windowpanes, optical materials, protection sheets for a LCD and an EL display

**Best Mode for Carrying Out the Invention**

The acrylic resin composition of the present invention comprises an acrylic resin as a main component and a terminal-modified polycarbonate resin in combination therewith.

(1) Acrylic Resin

The acrylic resin, which is a main component of the resin composition of the present invention, is not particularly limited as long as it is a polymer mainly comprising an acrylic monomer. Examples of the acrylic monomer include (meth) acrylic acids, (meth)acrylates and (meth)acrylamides.

Examples of (meth)acrylic acids include methacrylic acid and acrylic acid. Examples of (meth)acrylates include alkyl methacrylates having an alkyl group of 1-20 carbon atoms such as methyl methacrylate, ethyl methacrylate, propyl methacrylate, butyl methacrylate, cyclohexyl methacrylate, octyl methacrylate, lauryl methacrylate and stearyl methacrylate; alkyl acrylates having an alkyl group of 1-20 carbon atoms such as methyl acrylate, ethyl acrylate, propyl acrylate, butyl acrylate, octyl acrylate, lauryl acrylate and stearyl acrylate; and glycidyl (meth) acrylates such as glycidyl methacrylate and glycidyl acrylate. Examples of (meth)acrylamides include methacrylamide and acrylamide.

These acrylic monomers can be used each independently, or two or more of them can be used in combination with each other. Among them, methyl methacrylate is preferable.

The acrylic resin comprising the above-mentioned acrylic monomers can be a homopolymer formed of only one type of the above acrylic monomers, or can be copolymer wherein two or more of the acrylic monomers are comprised

in combination with each other, or can be a copolymer wherein the acrylic monomer as the main component and other vinyl monomers in the amount of less than 50% by weight are comprised. Examples of the other vinyl monomers include styrene, $\alpha$-methyl styrene, acrylic nitrile, butadiene, and vinyl acetate.

Preferable examples of the acrylic resin to be used for the present invention include polymethylmethacrylate and a copolymer comprising methylmethacrylate as a main component. Most preferable example thereof is a methylmethacrylate copolymer comprising methylmethacrylate as a main component and methacrylate as a copolymerization component in combination with each other.

While the molecular weight of the acrylic resin to be used for the present invention is not particularly limited, it is preferably in the range wherein extrusion molding by heating and melting can be carried out. It is preferable that a polystyrene-conversion weight average molecular weight is in the range of 50,000 to 500,000, more preferably in the range of 70,000 to 300,000.

The process for producing the acrylic resin can be roughly classified into an emulsification polymerization, a suspension polymerization and a continuous polymerization. A resin produced by any polymerization methods can be used for the acrylic resin of the present invention. Preferably, a resin produced by a suspension polymerization method or a continuous polymerization method can be used, more preferably a resin produced by a continuous polymerization method can be used. The continuous polymerization method can be classified into a continuous mass polymerization and a continuous solution polymerization. In the present invention, any acrylic resins produced by either method can be used.

The continuous mass polymerization and continuous solution polymerization, additives such as an emulsifier as a polymerization auxiliary agent and a suspension dispersing agent are not used at all. Only a polymerization initiator for initiating polymerization and a chain transfer agent for adjusting the molecular weight are added. Examples of solvents for the continuous solution polymerization include toluene, ethylbenzene, xylene, hexane, octane, cyclohexane, methanol, ethanol, propanol, butanol, acetone and methylethylketone. However, the solvents are not particularly limited as far as the polymerization reaction can be carried out effectively and the solvents do not remain in the acrylic resin thus obtained.

The polymerization initiator can be selected from commonly used azo polymerization initiators or peroxide polymerization initiators. Examples of the azo polymerization initiators include 2,2'-azobis-isobutylonitrile, 2,2'-azobis (2-methylbutylonitrile), and 1,1'-azobis(cyclohexane-1-carbonitrile). Examples of the peroxide polymerization initiators include benzoyl peroxide, di-t-butylperoxide and di-t-amylperoxide. However, the polymerization initiators are not limited to the above examples.

As the chain transfer agent, mercaptans are commonly used. Examples of the mercaptans include butyl mercaptan, hexyl mercaptan, octyl mercaptan and dodecyl mercaptan, though the chain transfer agents are not limited to the above examples.

(2) Terminal-modified Polycarbonate Resin

The terminal-modified polycarbonate resin to be used for the present invention has a terminal polysiloxane structure represented by the following general formula (1).

[Chemical Formula 11]

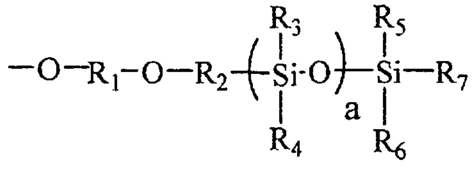

(1)

In the general formula (1), $R_1$ and $R_2$ respectively represent an alkylene group having 1-20 carbon atoms, preferably having 1-6 carbon atoms. Examples of the alkylene groups include an ethylene group, a propylene group and a butylene group.

$R_3$ to $R_7$ respectively represent a group selected from the group consisting of a hydrogen atom, a fluorine atom, a chlorine atom, a bromine atom, an iodine atom, an alkyl group having 1-9 carbon atoms (preferably having 1-4 carbon atoms), an aryl group having 6-12 carbon atoms, an alkenyl group having 2-5 carbon atoms, an alkoxy group having

1-5 carbon atoms and an aralkyl group having 7-17 carbon atoms (preferably having 7 carbon atoms). These groups of $R_3$ to $R_7$ can be identical or different with each other. Particularly preferable examples of the $R_3$ to $R_7$ include an alkyl group having 1-9 carbon atoms and an aryl group having 6-12 carbon atoms. Examples of the alkyl groups having 1-9 carbon atoms and the aryl groups having 6-12 carbon atoms include a methyl group, an ethyl group, a propyl group, a butyl group such as a n-butyl group, a sec-butyl group and a tert-butyl group, a phenyl group and a methoxy group. Among them, the most preferable group is selected from the group consisting of a methyl group, a butyl group and a phenyl group.
In the above general formula (1), "a" represents an integer of 1 to 1000, preferably 4 to 100.

The preferable examples of the polysiloxane groups comprised in the above general formula (1) include a group derived from polyalkylene siloxane, polyaryl siloxane, polyalkylaryl siloxane or the like. To be more precise, the more preferable examples of said polysiloxane groups include a group derived from polydimethylsiloxane, polydiethylsiloxane, polydiphenylsiloxane and polymethylphenylsiloxane. These siloxanes can be used each independently, or two or more of them can be used in combination with each other.

In the general formula (1), "a" represents an average polymerization degree which is the length of the polysiloxane group. "a" is an integer of 1 to 1000, preferably 4 to 100. It is preferable that "a" has a large value to a certain degree in order to exhibit the characteristics of siloxane sufficiently. In case when "a" is larger than 1000, production efficiency of the terminal-modified polycarbonate resin may be deteriorated as described later, which is not suitable for practical use. However, it must be noted that, since polysiloxane is a polymer which is a mixture of the compounds having various lengths of polymer chains, "a" represents an average value of the polymerization degree which has a certain level of distribution in general.

The polycarbonate resin which forms a main chain of the terminal-modified polycarbonate resin having the terminal groups represented by the above general formula (1) of the present invention can be a commonly used polycarbonate resin and is not particularly limited. It is preferable to use a polycarbonate resin having a recurring unit (carbonate unit) represented by the following general formula (2):

[Chemical Formula 12]

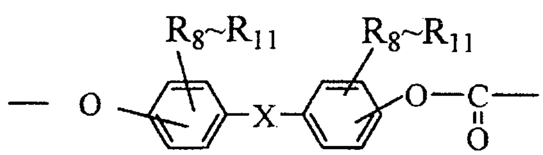

(2)

In the general formula (2), each of $R_8$ to $R_{11}$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms. Preferable examples of $R_8$ to $R_{11}$ include a hydrogen atom and a methyl group.
"X" represents a group selected from the group consisting of the following divalent organic groups represented by the following formulae:

[Chemical Formula 13]

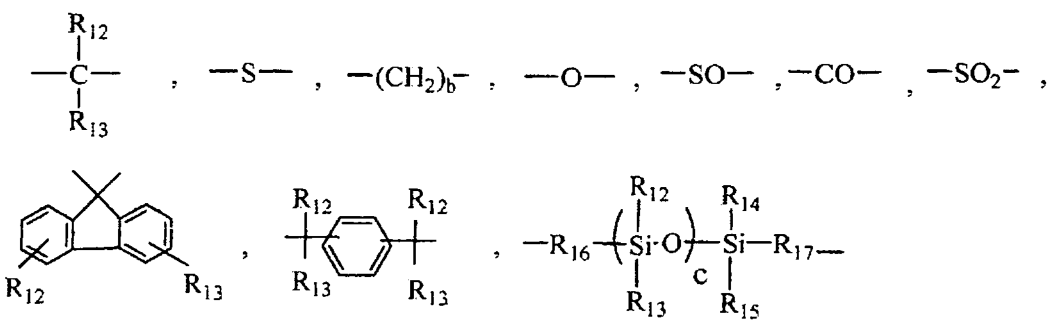

In the following formulae, each of $R_{12}$ to $R_{15}$ independently represents a hydrogen atom, a fluorine atom, a chlorine atom, a bromine atom, an iodine atom, an alkyl group having 1-9 carbon atoms, an alkoxy group having 1-5 carbon atoms, an aryl group having 6-12 carbon atoms or a group wherein $R_{12}$ to $R_{15}$ are combined with each other to form a carbocyclic ring or a heterocyclic ring. $R_{16}$ and $R_{17}$ respectively represent an alkylene group having 1-20 carbon atoms. "b" represents an integer of 0 to 20. "c" represents an integer of 1 to 1000.

Examples of the recurring units represented by the above general formula (2) include constitutional units derived from bisphenols such as 1,1'-biphenyl-4,4'-diol, bis(4-hydroxyphenyl)methane, bis(4-hydroxyphenyl)ether, bis(4-hydroxyphenyl)sulfone, bis(4-hydroxy-3-methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxy-3-t-butylphenyl)propane, 2,2-bis(4-hydroxyphenyl)butane, 1,1-bis(4-hydroxyphenyl)cyclohexane, 1,1-bis(4-hydroxy-3-methylphenyl)cyclohexane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, 2,2-bis(4-hydroxy-3-allylphenyl)propane, 3,3,5-trimethyl-1,1-bis(4-hydroxyphenyl)cyclohexane, 1,1-bis(4-hydroxy-2-methyl-5-t-butylphenyl)-2-methylpropane, 9,9-bis(4-hydroxy-3-ethylphenyl)fluorene, 9,9-bis(4-hydroxy-3-methylphenyl)fluorene, 9,9-bis(4-hydroxyphenyl)fluorene, 1,1-bis(4-hydroxyphenyl)cyclododecane, 1,1-bis(4-hydroxy-3-methylphenyl)cyclododecane, 2,2-bis(4-hydroxyphenyl)hexafluoropropane, 2,2-bis(4-hydroxy-3,5-dimethylbromophenyl)propane, α,ω-bis[3-(o-hydroxyphenyl)propyl]polydimethyldiphenyl random copolymerized siloxane, a,w-bis[3-(o-hydroxyphenyl)propyl]polydimethylsiloxane, 4,4'-[1,4-phenylene-bis(1-methylethylidene)]bisphenol, and 4,4'-[1,3-phenylene-bis(1-methylethylidene)]bisphenol.

Two or more of these bisphenols can be used in combination with each other.

Particularly preferable examples of the recurring units represented by the above general formula (2) include constitutional units derived from bisphenols selected from the group consisting of 2,2-bis(4-hydroxyphenyl)propane, 1,1-bis(4-hydroxyphenyl)cyclohexane, 1,1-bis(4-hydroxy-3-methylphenyl)cyclohexane, 2,2-bis(4-hydroxy-3-methylphenyl)propane, 1,1-bis(4-hydroxyphenyl) ethane, bis(4-hydroxyphenyl)methane, and 1,1'-biphenyl-4,4'-diol.

Preferable terminal-modified polycarbonate resin to be used for the present invention include a polycarbonate resin constituted from the recurring units represented by the above general formula (2) and having a terminal structure represented by the above general formula (1). To be more precise, the polycarbonate resin has a structure represented by the following formula (2').

[Chemical Formula 14]

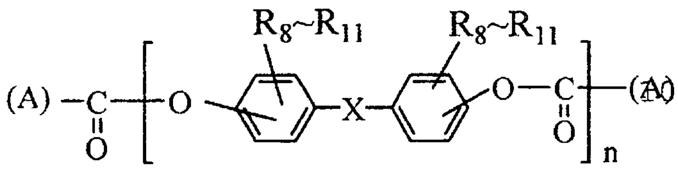

(2')

In the above formula (2'), $R_8$ to $R_{11}$ and X respectively represent same groups as $R_8$ to $R_{11}$ and X in the above general formula (2). "(A)" represents the terminal group represented by the above general formula (1). "n", which is an average polymerization degree determined by a molar ratio of monofunctional compounds which derives the general formula (1) to the raw material bisphenols, represents an integer of not less than 1, preferably 7 to 200, more preferably 7 to 100, most preferably 7 to 30.

The terminal-modified polycarbonate resin of the present invention can be added and mixed with an acrylic resin with ease and the average molecular weight thereof is not particularly limited. The preferable range of intrinsic viscosity [η] of said polycarbonate resin at 20°C as a solution of the concentration of 0.5g/dl using methylene chloride as a solvent is 0.05 to 1.0 dl/g, more preferably 0.05 to 0.5 dl/g, most preferably 0.1 to 0.5 dl/g in terms of easiness of handling. The intrinsic viscosity can be converted to viscosity-average molecular weight (Mv) by the following mathematical formula:

$$[\eta] = 1.23 \times 10^{-4}\ Mv^{0.83}$$

Considering the roll pollution at the time of a long-term continuous molding, it is preferable that the temperature of 1% weight loss on heating is in the range of 230 to 490°C, more preferably in the range of 280 to 490°C. In case when the temperature of 1% weight loss on heating is lower than 230°C, the amount of volatilization at the time of molding may increase and the effect of roll releasability may be unstable.

The process for producing the terminal-modified polycarbonate resin to be used for the present invention is not particularly limited. For example, it can be produced by reacting a terminal carbinol-modified silicone with the molecular terminal of polycarbonate. To be more precise, it can be produced by reacting the bisphenols represented by the following formula (3) and polysiloxane monocarbinol represented by the following formula (4) as a compound which can derive the structure represented by the above general formula (1) of the present invention with a carbonate-forming compound. In the following formula (3), $R_8$ to $R_{11}$ and X respectively represent same groups as $R_8$ to $R_{11}$ and X in the above general formula (2). In the following formula (4), $R_1$ to $R_7$ and "a" respectively represent as $R_1$ to $R_7$ and "a" in the above general formula (1).

[Chemical Formula 15]

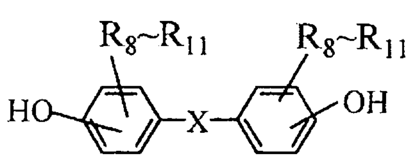

(3)

[Chemical Formula 16]

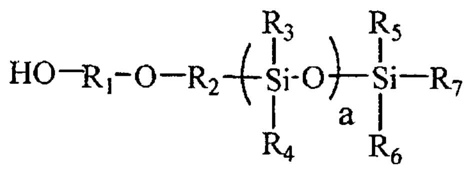 (4)

Examples of the polysiloxane monocarbinol represented by the above formula (4) include a commercial available mono-terminal type "SILAPLANE"; tradename, manufactured by Chisso Corporation, and the like.

In addition, examples of the polysiloxane monocarbinol represented by the above formula (4) include compounds having the structures represented by the following formulae, monochloroformates thereof and monocarbonates thereof. In the following structural formulae, it is preferable that the polymerization degree b and c respectively represent 1 to 100, more preferably 1 to 20 on the average.

[Chemical Formula 17]

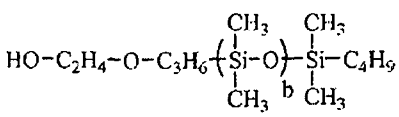 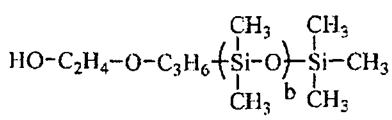

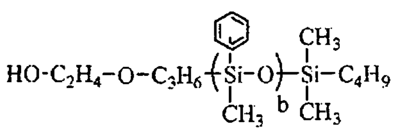 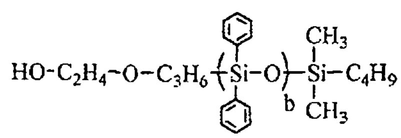

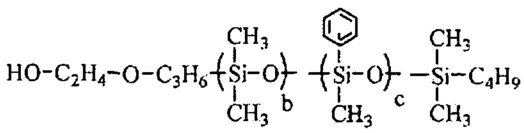 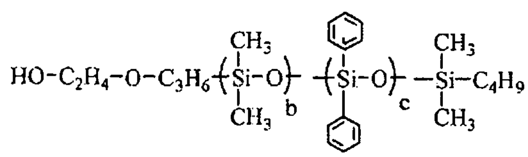

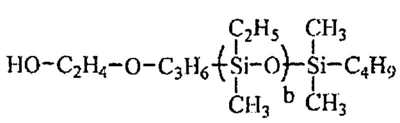 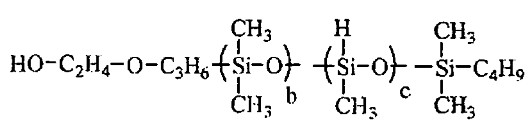

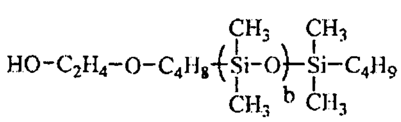 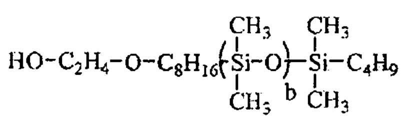

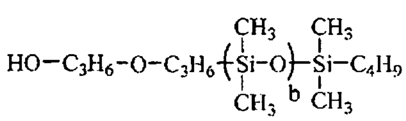 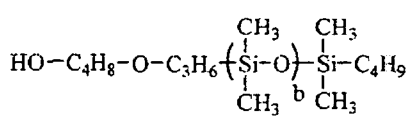

The above-mentioned polysiloxane monocarbinols can be used each independently, or two or more of them

can be used in combination with each other. Furthermore, commonly used terminal terminating agents such as phenols such as phenol, p-t-butylphenol and cumylphenol, and chloroformates such as ethyl chloroformate and phenylchloroformate can be used together. In case when using commonly used terminal terminating agents, it is preferable to use them in the amount of 50 mol% or less based upon the terminal terminating agent of the present invention which derives the structure represented by the above general formula (1) or which is polysiloxane monocarbinol represented by the formula (4).

Examples of the bisphenols represented by the above formula (3) include 1,1'-biphenyl-4,4'-diol, bis(4-hydroxyphenyl)methane, bis(4-hydroxyphenyl)ether, bis(4-hydroxyphenyl)sulfone, bis(4-hydroxy-3-methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxy-3-t-butylphenyl)propane, 2,2-bis(4-hydroxyphenyl)butane, 1,1-bis(4-hydroxyphenyl)cyclohexane, 1,1-bis(4-hydroxy-3-methylphenyl)cyclohexane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, 2,2-bis(4-hydroxy-3-allylphenyl)propane, 3,3,5-trimethyl-1,1-bis(4-hydroxyphenyl)cyclohexane, 1,1-bis(4-hydroxy-2-methyl-5-t-butylphenyl)-2-methylpropane, 9,9-bis(4-hydroxy-3-ethylphenyl)fluorene, 9,9-bis(4-hydroxy-3-methylphenyl)fluorene, 9,9-bis(4-hydroxyphenyl)fluorene, 1,1-bis(4-hydroxyphenyl)cyclododecane, 1,1-bis(4-hydroxy-3-methylphenyl)cyclododecane, 2,2-bis(4-hydroxyphenyl)hexafluoropropane, 2,2-bis(4-hydroxy-3,5-dimethylbromophenyl)propane, $\alpha,\omega$-bis[3-(o-hydroxyphenyl)propyl]polydimethyldiphenyl random copolymerized siloxane, $\alpha,\omega$-bis[3-(o-hydroxyphenyl)propyl]polydimethylsiloxane, 4,4'-[1,4-phenylene-bis(1-methylethylidene)]bisphenol, and 4,4'-[1,3-phenylene-bis(1-methylethylidene)]bisphenol.
Two or more of these bisphenols can be used in combination with each other.

Among them, it is particularly preferable to select the bisphenols represented by the above formula (3) from the group consisting of 2,2-bis(4-hydroxyphenyl)propane, 1,1-bis(4-hydroxyphenyl)cyclohexane, 1,1-bis(4-hydroxy-3-methylphenyl)cyclohexane, 2,2-bis(4-hydroxy-3-methylphenyl)propane, 1,1-bis(4-hydroxyphenyl)ethane, bis(4-hydroxyphenyl)methane, and 1,1'-biphenyl-4,4'-diol.

Examples of the carbonate forming compounds include phosgene and bisarylcarbonates such as diphenylcarbonate, di-p-tolylcarbonate, phenyl-p-tolylcarbonate, di-p-chlorophenylcarbonate, dinaphthylcarbonate, bis-(2,4-dinitrophenyl)carbonate and the like.
Two or more of these compounds can be used in combination with each other.

The terminal-modified polycarbonate resin to be used for the present invention can be produced by any of the known methods used for producing a polycarbonate resin from bisphenol A. Examples of such methods include a direct reaction process of bisphenols and phosgene (a phosgene method) and an ester exchange reaction of bisphenols with bisarylcarbonates (a transesterification method).

The phosgene method is conducted by reacting bisphenols represented by the above formula (3) with phosgene commonly under the presence of an acid coupling agent and a solvent.
Examples of acid coupling agents include pyridine and hydroxides of alkali metals such as sodium hydroxide, potassium hydroxide and the like. Examples of solvents include methylene chloride, chloroform, chlorobenzene and xylene.

In addition, for the purpose of accelerating the condensation polymerization reaction, it is preferable to use a tertiary amine catalyst such as triethylamine or a quaternary ammonium salt such as benzyltriethylammoniumchloride.
According to the production process according to the present invention, the terminal-modified polycarbonate resin can be obtained by reacting monochloroformate derived from polysiloxane monocarbinol represented by the above formula (4) as a terminal terminating agent for adjusting the polymerization degree. Moreover, it is also possible to add by a small amount an antioxidant such as sodium sulfite and hydrosulfite and/or a branching agent such as fluoroglycin, isatin bisphenol and trisphenolethane, if desired.

Generally, it is proper to conduct the reaction at a temperature range between 0˚C and 150˚C, preferably between 5˚C and 40˚C. While the reaction time may vary depending on the reaction temperature, it is normally between 0.5 minutes and 10 hours, preferably between 1 minute and 2 hours. It is desirable to keep the pH of the reaction system not below 10 during the reaction.

According to the transesterification method, bisphenols represented by the above formula (3), bisarylcarbonate and polysiloxane monocarbinol represented by the above formula (4) or polysiloxane monocarbonate derived from the above formula (4) are mixed together and reacted with each other under reduced pressure at high temperature or under the presence of an organic solvent.
The reaction can be carried out by adding these components at a time, or by firstly reacting bisphenols with bisarylcarbonate and subsequently adding the above-mentioned polysiloxane monocarbinol or polysiloxane monocarbonate thereto, or by firstly obtaining polycarbonate having terminal phenolic hydroxy groups by a phosgene method and subsequently adding and reacting the above-mentioned polysiloxane monocarbonate therewith.

The reaction under the absence of solvents is generally conducted in a temperature range between 150˚C and 350˚C, preferably between 200˚C and 300˚C. The ultimate pressure is preferably reduced to 1mmHg or less to remove the phenols, which are derived from said bisarylcarbonate and are produced as a result of the transesterification method,

from the reaction system by distillation.
While the reaction time varies depending on the reaction temperature and the reduced pressure level, it is generally 1 to 4 hours. The reaction is preferably conducted in an atmosphere of inert gas such as nitrogen or argon. If desired, the reaction may be conducted by adding an antioxidant and/or a branching agent.

When the transesterification reaction is conducted under the presence of a solvent, bisphenols represented by the above formula (3), bisarylcarbonate and polysiloxane monocarbinol represented by the above formula (4) or polysiloxane monocarbonate derived from the above formula (4) are mixed into a solvent such as methylene chloride, chloroform, chlorobenzene and xylene, and then a catalyst such as triethylamine and 4-(dimethylamino)pyridine is added thereto to carry out the polymerization. It is preferable to carry out the reaction in the range from room temperature to the temperature below the boiling point of the solvent at normal pressures.
It is also possible to employ a method wherein firstly producing polycarbonate having terminal-phenolic hydroxyl groups by a phosgene method or a transesterification method under the absence of solvents, and subsequently attaching polysiloxane carbinol at the terminal thereof by a transesterification reaction under the presence of a solvent.

The terminal-modified polycarbonate resin synthesized by the above-mentioned reactions can be blended with an acrylic resin with ease. However, it is more desirable that it has an intrinsic viscosity [η] in the range of 0.05 to 1.0 dl/g, preferably in the range of 0.05 to 0.5 dl/g, particularly preferably in the range of 0.1 to 0.5 dl/g in terms of easiness of handling. The intrinsic viscosity can be converted to viscosity-average molecular weight (Mv) by the following mathematical formula:

$$[\eta] = 1.23 \text{ X } 10^{-4}\, Mv^{0.83}$$

Considering the roll pollution at the time of a long-term continuous molding, it is preferable that the terminal-modified polycarbonate resin has a temperature of 1% weight loss on heating in the range of 230 to 490˚C, more preferably in the range of 280 to 490˚C. In case when the terminal-modified polycarbonate resin has a temperature of 1% weight loss on heating at lower than 230˚C, the amount of volatilization at the time of molding may increase and the effect of roll releasability may be unstable.

When synthesizing the terminal-modified polycarbonate resin of the present invention, all (100%) of the terminals of the polycarbonate resin thus obtained do not necessarily become a terminal group represented by the general formula (1), because of the presence of impurities of polysiloxane monocarbinol and/or unreacted components thereof at the time of polymerization.
However, considering the residual amount of impurities and reaction rate, at least 80% of the terminals of the polycarbonate resin are a terminal group represented by the general formula (1) . Furthermore, the percentage of the terminal-modified polycarbonate resin having at least one siloxane group (or a terminal group represented by the general formula (1)) at its terminal is not less than 90% by weight based upon the total amount of polycarbonate obtained by the synthesis. Examples of the terminals having structures other than those represented by the general formula (1) include an unreacted phenolic terminal and an unreacted chloroformate terminal. In addition, there can be a structure forming a ring formation having no terminals.

The content of the silicone component in the terminal-modified polycarbonate resin of the present invention is preferably 1-50% by weight, more preferably 5-40% by weight, on the average, in terms of Si element, based upon the total polymer components.

(3) Acrylic Resin Composition:

The acrylic resin composition according to the present invention is a blend of an acrylic resin with the terminal-modified polycarbonate resin. The content of the terminal-modified polycarbonate resin is preferably 0.1 to 15% by weight based upon the total amount of the composition. It is more preferable that the content of the terminal-modified polycarbonate resin is 1 to 7% by weight for the purpose of improvement in molding roll releasability at the time 1f co-extrusion with other resins. In case when the content of the terminal-modified polycarbonate resin is less than 0.1% by weight, the effect of improvement in releasability and surface modifying effect may be insufficient. In case when the content is more than 15% by weight, transparency and/or appearance may be deteriorated.

The acrylic resin composition of the present invention can comprise known additives such as an ultraviolet absorbent, an antioxidant and a coloring agent in accordance with various requests.
Moreover, in addition to the terminal-modified polycarbonate resin, other lubricants can be added together. Particularly, further improvement in releasability can be obtained by adding fatty acid amides and/or higher alcohols by a small amount.

Examples of the fatty acid amides which can be used in the present invention include ethylene bis stearic acid amide, methylene bis stearic acid amide, stearic acid amid and behenic acid amide. Examples of the higher alcohols

include stearyl alcohol, lauryl alcohol, behenyl alcohol and palmityl alcohol.

In case when using these other lubricants together, the amount used is preferably in the range of 0.05 to 1.0% by weight based upon the total amount of the acrylic resin composition, and in addition, the amount used is preferably in the range of 1 to 40 parts by weight based upon 100 parts by weight of the terminal-modified polycarbonate resin.

(4) Process for Producing Acrylic Resin Composition:

The acrylic resin composition of the present invention can be produced by a process comprising firstly blending the terminal-modified polycarbonate resin of the present invention with a monomer of the acrylic resin (acrylic monomer) and then polymerizing said acrylic monomer to produce an acrylic resin, or a process comprising blending the terminal-modified polycarbonate resin with an acrylic resin.

According to the process comprising firstly blending the terminal-modified polycarbonate resin with an acrylic monomer and then polymerizing said acrylic monomer, the terminal-modified polycarbonate resin is dissolved or dispersed into the acrylic monomer, wherein a radical initiator such as benzoyl peroxide, azobisisobutyronitrile, benzophenone and 2-methyl-1-[4-(methylthio)phenyl]-2-moriphorinopropane-1-one is added thereto, and then polymerization (or curing) is carried out by heating or light irradiation.
Examples of methods for polymerization include suspension polymerization, emulsion polymerization, mass polymerization and solution polymerization. In case when the polymerization is carried out by heating, the preferable conditions include heating temperature of 20 to 160˚C and heating time of 0.1 to 24 hours. In case when the polymerization is carried out by light irradiation, the preferable conditions include wave length of 200 to 500 nm and irradiation time of 0.1 to 30 minutes.

The method for blending the acrylic monomer and the terminal-modified polycarbonate resin is not particularly limited. For example, a method of blending using a cylinder rotation type blender and/or an agitator can be employed. In addition, a divinyl compound such as N,N'-methylenebisacrylamide and ethyleneglycol dimethacrylate can be added to the acrylic monomer as a cross-linking agent.

In case when the acrylic resin is blended with the terminal-modified polycarbonate resin, after mixing the terminal-modified polycarbonate resin and other additives to be used if necessary with the acrylic resin, the mixture thus obtained is kneaded by a known method. Kneading machines such as a rotary vessel mixer, a fixed container type mixer, a roll kneading machine are used for kneading. It is preferable that kneading is carried out under the conditions of kneading temperature in the range from room temperature to 270˚C and kneading time of 1 to 120 hours.

In case when the acrylic resin composition layer is laminated onto the other resins layer as a hard coat after forming the other resins layer, it is preferable to obtain an acrylic resin composition by firstly blending the acrylic monomer with the terminal-modified polycarbonate resin and then polymerizing the acrylic monomer.
Meanwhile, in case when other resins and the acrylic resin composition are laminated simultaneously by co-extrusion to mold a multilayer laminate or a multilayer sheet, it is preferable to firstly obtain an acrylic resin composition by adding the terminal-modified polycarbonate resin to the acrylic resin and use the acrylic resin composition thus obtained for co-extrusion.

The acrylic resin composition of the present invention can be molded by known molding methods such as a wet molding, a compression molding, a vacuum compression molding, an extrusion molding, an injection molding, an inflation molding or the like.
When carrying out an extrusion molding or an injection molding using the acrylic resin composition independently, the thickness of the molded product is preferably 0.1 mm to 2 cm. When carrying out a co-extrusion molding or the like in combination with other resins to form a multilayer molded product, the layer thickness of the acrylic resin composition is preferably 10 to 100 μm.

(5) Molded Product:

The molded product according to the present invention is a product obtained by molding the above-mentioned acrylic resin composition of the present invention. The method for molding is not particularly limited. Examples of molding methods include a wet molding, a compression molding, a vacuum compression molding, an extrusion molding, an injection molding and an inflation molding.

While the shape of the molded product is not particularly limited and various shapes can be employed as usage, the molded product of the present invention is preferably a film- or sheet-formed product.
In case when the molded product is a product formed only of the acrylic resin composition obtained by an extrusion molding or an injection molding or a single-layer film- or sheet-formed product, the thickness of said product, though can be determined appropriately as usage, is preferably 0.1 mm to 2 cm.
Examples of the molded products of the present invention other than the above-mentioned film- or sheet-formed product include an injection molded product, a compression molded product, a vacuum compression molded product, an inflation

molded product and a casting molded product.

(6) Multilayer Laminate:

The acrylic resin composition of the present invention can be molded to form a multilayer laminate in combination with other resins. That is, the multilayer laminate of the present invention is characterized in that it comprises at least a layer formed of the above-mentioned acrylic resin composition of the present invention.

The method for forming the multilayer laminate is not particular limited. Examples of methods for forming the multilayer laminate include a method wherein the acrylic resin composition of the present invention and other resins are subjected to a multilayer lamination using a co-extrusion molding, a method wherein the acrylic resin composition of the present invention is firstly molded to form a film- or sheet-product and then laminating the film- or sheet-formed product with a film- or sheet-formed product formed of other resins, a method wherein the acrylic resin composition is extruded onto a film- or sheet-formed product formed of other resins and a method wherein firstly the acrylic monomer is coated on a film- or sheet-formed product formed of other resins and then heat or light irradiation is applied onto said coating layer for curing to form a layer of the acrylic resin composition. The most preferable method among them is a method using a co-extrusion molding.

In case when the multilayer laminate of the acrylic resin composition and other resins, the thickness of the layer of the acrylic resin composition can be determined appropriately as usage and the preferably thickness thereof is 10-100 μm, more preferably 15-80 μm. The ratio of the thickness of the acrylic resin composition layer and the other resin layer is preferably as follows:

[the acrylic resin composition layer]:[the other resin layer]=1:1 to 1:200.

When the acrylic resin composition of the present invention and the other resin are molded by a co-extrusion molding to form a multilayer formation, the number of the layers, the combination thereof, the laminating order and the like are not particularly limited. It is preferable that the layer of the acrylic resin composition of the present invention forms an outermost surface layer (a skin layer) of the multilayer laminate.

Examples of the other resins which can form the multilayer laminate of the present invention in combination with the acrylic resin composition include polycarbonate, polyethylene terephthalate, polybutylene terephthalate, polyethylene naphthalate, polyarylate, polystyrene, an ABS resin, an MS resin, an AS resin, polyamide, polyoxymethylene, polyphenylene ether, polyvinyl chloride, polyvinylidene chloride, polyethylene, polypropylene, polytetrafluoroethylene, polysulfone, polyethersulfone, TPX, polycycloolefin and polyvinyl adamantane. Among them, it is preferable to combine with polycarbonate which is excellent in transparency and impact resistance.

The process for producing the multilayer laminate of the present invention will be described more precisely below referring to an example which is a process for producing a multilayer sheet by a co-extrusion molding using polycarbonate as a substrate:

> The extruding machine for producing a multilayer sheet comprises a main extruder which extrudes a polycarbonate resin constituting a substrate (or a base layer) and one or two subsidiary extruder (s) which extrudes the acrylic resin composition that will be coated on one side or both sides of the base layer, wherein the subsidiary extruder is smaller in size than the main extruder in general.

The temperature condition of the main extruder is generally 230-290˚C, preferably 240-280˚C. The temperature condition of the subsidiary extruder is generally 220-270˚C, preferably 230-260˚C.

As the method for coating two or more molten resins, known methods such as a feed block method and a multi-manifold method can be employed. The molten resin laminated by a feed block method is introduced to a sheet molding die such as T-die to form a sheet, and then it is flowed to a molding roll having a mirror finished surface (a polishing roll) to form a bank.

The sheet-formed molded product thus obtained is subjected to a process of mirror finishing and cooling in the course of passing through the molding roll, and thus a laminate is obtained.

In case of using a multi-manifold type die, the molten resin laminated in said die is molded to form a sheet in the die in the same manner as mentioned above, and then it is subjected to a process of mirror finishing and cooling while passing through the molding roll to form a laminate.

The temperature of the die is generally 250-320˚C, preferably 270-300˚C. The temperature of the molding roll is generally 100-190˚C, preferably 110-180˚C. As for the molding roll, a vertical roll or a horizontal roll can be used appropriately.

It is one of the preferable embodiments of the present invention to place a polymer filter having an opening diameter of 10 μm in front of the T-die of the subsidiary extruder in order to remove minute foreign matters mixed in the acrylic resin. When cleanliness of the subsidiary extruder is ensured, it is also one of the preferable embodiments of the present invention to place a polymer filter having an opening diameter of 10 μm in the course of a pelletizing process.

The above-mentioned multilayer laminate of the present invention can further comprise a hardcoat layer. The hardcoat layer is formed on the outermost layer of the multilayer laminate. Therefore, hard coat treatment is preferably applied on the surface of the layer of the acrylic resin composition of the present invention.

The hard coating process applied on the acrylic resin composition layer comprises laminating of a hardcoat layer cured by heat or an active energy ray for the purpose of improvement in scratch resistance.

Examples of coating materials which can be cured by an active energy ray include a resin composition comprising at least one of monofunctional or multifunctional acrylate monomers or oligomers and a photo-polymerization initiator as a curing catalyst.

Examples of resinous coating materials which can be cured by heat include polyorganosiloxanes and cross-linkable acrylic compounds.

These coating materials are commercially available as a hard coating agent for an acrylic resin or a polycarbonate resin. Suitable coating materials can be selected appropriately taking adaptability to a coating line into consideration.

These coating materials can properly comprise various additives such as stabilizers such as an ultraviolet absorbent, a light stabilizer and an antioxidant, a leveling agent, an antifoaming agent, a thickening agent, an antistatic agent and surfactants such as an anticlouding agent, if necessary.

The hard coat treatment can also be applied onto a surface of the polycarbonate resin layer being not co-extruded in order to improve scratch resistance.

The hard coat treatment is conducted by laminating a hard coat layer cured by an active energy ray on the polycarbonate resin layer.

Examples of coating materials which can be cured by an active energy ray include a resin composition comprising at least one of monofunctional or multifunctional acrylate monomers or oligomers and a photo-polymerization initiator as a curing catalyst.

Examples of resinous coating materials which can be cured by heat include polyorganosiloxanes and cross-linkable acrylic compounds.

These coating materials are commercially available as a hard coating agent for an acrylic resin or a polycarbonate resin. Suitable coating materials can be selected appropriately taking adaptability to a coating line into consideration.

These coating materials can properly comprise various additives such as stabilizers such as an ultraviolet absorbent, a light stabilizer and an antioxidant, a leveling agent, an antifoaming agent, a thickening agent, an antistatic agent and surfactants such as an anticlouding agent, if necessary.

Examples of coating materials which can form a hard coat layer on the acrylic resin composition layer by curing using an active energy ray include a resin composition comprising (A) 100 parts by weight of a photo-polymerizable composition which comprises 2-80% by weight of a difunctional (meth)acrylate compound having a weight-average molecular weight of not more than 300 and 20-98% by weight of a 6-functional urethane acrylate oligomer copolymerizable therewith and (B) 1-10 parts by weight of a photo-polymerization initiator.

Examples of the difunctional (meth) acrylate compounds having a weight-average molecular weight of not more than 300 include diethyleneglycol di(meth)acrylate, dipropyleneglycol di(meth)acrylate, tripropyleneglycol diacrylate, 1,6-hexanediol di(meth)acrylate, 2-(2'-vinyloxyethoxy)ethyl (meth)acrylate and 1,4-butanediol diacrylate,

Examples of the 6-functional urethane acrylate oligomers include tradename; "EB-220", manufactured by DAICEL-CYTEC COMPANY, LTD., tradename; "UN-3320HC" manufactured by Negami Chemical industrial Co., Ltd., tradename; "UN-3320HA" manufactured by Negami Chemical industrial Co., Ltd., tradename; "UV-7600B" manufactured by Nippon Synthetic Chemical Industry Co., Ltd., and tradename; "UV-7640B" manufactured by Nippon Synthetic Chemical Industry Co., Ltd.

Examples of the photo-polymerization initiators (B) include benzoin, benzophenone, benzoin ethylether, benzoin isopropylether, 2,2-dimethoxy-2-phenylacetophenone, 1-hydroxy cyclohexyl phenylketone, 2-hydroxy-2-methyl-1-phenylpropane-1-one, azobisisobutyronitrile and benzoyl peroxide.

Examples of the heat-curable resinous coating materials for forming a hard coat layer on the acrylic resin composition layer by heat curing include a composition comprising the following components (i), (ii) and (iii):

(i) 1-98 parts by weight of organotrialkoxysilane (C) represented by the formula $[R_1Si(OR_2)_3]$, wherein $R_1$ represents a substituted or non-substituted monovalent hydrocarbon group and $R_2$ represents an alkyl group,
(ii) 1-98 parts by weight of a composition comprising 50-100 parts by weight of colloidal silica having a particle size of 4-20nm (D) wherein the content of silicic anhydride is 10-50% by weight based upon the total amount of colloidal silica (D) and 50-1000 parts by weight of a dispersing agent, and
(iii) 1.0-5.0 parts by weight of amine carboxylate and/or a quaternary ammonium carboxylate (E).

$R_1$ in the formula representing the above-mentioned organotrialkoxysilane (C) is preferably a substituted or non-substituted monovalent hydrocarbon group having 1-8 carbon atoms. Examples of the monovalent hydrocarbon groups include an alkyl group such as a methyl group, an ethyl group, a n-propyl group, a n-butyl group, an i-butyl group, a sec-butyl group, a n-hexyl group and a n-heptyl group, a γ-chloropropyl group, a vinyl group, a 3,3,3-trifluoropropyl group, a γ-glycidoxypropyl group, a γ-methacryloxypropyl group, a γ-mercaptopropyl group, a phenyl group, and a 3,4-epoxycyclohexylethyl group.

$R_2$ in the formula representing the organotrialkoxysilane (C) is preferably an alkyl group having 1-5 carbon atoms. Examples of the alkyl groups include a methyl group, an ethyl group, a n-propyl group, a n-butyl group, an i-butyl group, a sec-butyl group and a tert-butyl group.

Examples of the organotrialkoxysilane (C) include tetramethoxy silane, tetramethoxy silane, methyl trimethoxy silane, methyl triethoxy silane, ethyl trimethoxy silane, ethyl triethoxy silane, n-propyl trimethoxy silane, n-propyl triethoxy silane, i-propyl trimethoxy silane, i-propyl triethoxy silane, γ-chloropropyl trimethoxy silane, γ-chloropropyl triethoxy silane, vinyl trimethoxy silane, vinyl triethoxy silane, 3,3,3-trifluoropropyl trimethoxy silane, 3,3,3-trifluoropropyl triethoxy silane, γ-glycidoxypropyl trimethoxy silane, γ-glycidoxypropyl triethoxy silane, γ-methacryloxypropyl trimethoxy silane, γ-methacryloxypropyl triethoxy silane, γ-mercaptopropyl trimethoxy silane, γ-mercaptopropyl triethoxy silane, phenyl trimethoxy silane, phenyl triethoxy silane, 3,4-epoxycyclohexylethyl trimethoxy silane, 3,4-epoxycyclohexylethyl triethoxy silane, dimethyl dimethoxy silane, dimethyl diethoxy silane, diethyl dimethoxy silane, diethyl diethoxy silane, di-n-propyl dimethoxy silane, di-n-propyl diethoxy silane, di-i-propyl dimethoxy silane, di-i-propyl diethoxy silane, diphenyl dimethoxy silane and diphenyl diethoxy silane.

Among them, tetramethoxy silane, tetramethoxy silane, methyl trimethoxy silane, methyl triethoxy silane, dimethyl dimethoxy silane and dimethyl diethoxy silane are more preferable.

The colloidal silica (D) which is one of the components constituting the above-mentioned composition comprises 10-50% by weight of silicic anhydride. In addition, the average particle size of the colloidal silica is 4-20 nm.

Examples of the dispersing agents for said colloidal silica (D) include water, an organic solvent and a mixed solvent wherein water and at least one of hydrophilic organic solvents selected from the group consisting of lower aliphatic alcohols such as methanol, ethanol, isopropanol, n-butanol and isobutanol; ethyleneglycol derivatives such as ethyleneglycol, ethyleneglycol monobutylether and acetic acid ethyleneglycol monoethylether; diethyleneglycol derivatives such as diethyleneglycol and diethyleneglycol monobutylether; and diacetone alcohol.

Among these aqueous solvents, it is preferable to use water or a mixed solvent of water and methanol in terms of dispersion stability and drying characteristics of the dispersant after coating.

Examples of the commercially available products wherein colloidal silica is dispersed in a basic aqueous solution include tradenames; "SNOWTEX 30", "SNOWTEX 40", each manufactured by Nissan Chemical Industries, Ltd., and tradenames; "Cataloid-S30", "Cataloid-S40", each manufactured by Catalysts & Chemicals Ind. Co., Ltd.

Examples of the commercially available products wherein colloidal silica is dispersed in an acidic aqueous solution include tradename; "SNOWTEX O", manufactured by Nissan Chemical Industries, Ltd.

Examples of the commercially available products wherein colloidal silica is dispersed in an organic solvent include tradenames; "MA-ST", "IPA-ST", "NBA-ST", "IBA-ST", "EG-ST", "XBA-ST", "NPC-ST", and "DMAC-ST", each manufactured by Nissan Chemical Industries, Ltd.

Examples of the amine carboxylate and/or a quaternary ammonium carboxylate (E) include dimethylamine acetate, ethanolamine acetate, dimethylaniline formate, tetraethylammonium benzoate, trimethylbenzylammonium acetate, tetramethylammonium acetate, tetra-n-butylammonium acetate, tetraethylammonium acetate and 2-hydroxyethyl trimethylammonium acetate.

Examples of the coating materials for forming a hard coat layer on the polycarbonate resin layer by curing using an active energy ray before co-extruding the acrylic resin composition include an ultraviolet curable resinous coating composition comprising 100 parts by weight of a photo-polymerizable composition (F) which comprises 20-60% by weight of 1,9-nonanediol diacrylate (b1) and 40-80% by weight of other compounds (b2) copolymerizable with said (b1), and 1-10 parts by weigh of a photo-polymerization initiator (G).

Examples of other compounds (b2) which are copolymerizable with (b1) include multifunctional (meth)acrylate monomers having two or more functional groups, multifunctional urethane (meth)acrylate oligomers having two or more functional groups (hereinafter, "multifunctional urethane (meth)acrylate oligomer"), multifunctional polyester (meth)acrylate oligomers having two or more functional groups (hereinafter, "multifunctional polyester (meth)acrylate oligomer") and multifunctional epoxy (meth)acrylate oligomers having two or more functional groups (hereinafter, "multifunctional epoxy (meth)acrylate oligomer").

These (meth) acrylate monomers and oligomers can be used each independently, or two or more of them can be used in combination with each other.

Examples of the multifunctional (meth)acrylate monomers include a monomer having two or more (meth) acryloyloxy groups in a molecule.

Examples of the difunctional (meth)acrylate monomers include alkyleneglycol di(meth)acrylates, polyoxyalkyleneglycol

di (meth) acrylates, halogenated alkyleneglycol di (meth) acrylates, fatty acid polyol di (meth) acrylates, alkyleneoxide-added di(meth)acrylates of bisphenol A or bisphenol F and epoxy di (meth)acrylates of bisphenol A or bisphenol F. However, these are typical examples and they do not particularly limit the scope of the present invention. Various compounds can be used as the multifunctional (meth)acrylate monomers.

To be more precise, examples of difunctional (meth) acrylate monomers include 2-n-butyl-2-ethyl-1,3-propanediol diacrylate, tripropyleneglycol diacrylate, tetraethyleneglycol diacrylate, polyethyleneglycol di(meth)acrylate, polypropyleneglycol diacrylate, triethyleneglycol dimethacrylate, 1,6-hexanediol dimethacrylate and neopentylglycol dimethacrylate.

Examples of (meth)acrylate monomers having three or more functional groups include trimethylolpropane trimethacrylate, ethyleneoxide-added trimethylolpropane triacrylate, propyleneoxide-added glycerin triacrylate and pentaerythritol tetraacrylate.

Examples of the multifunctional (meth)acrylate oligomers include an urethanization reaction product of a (meth) acrylate monomer having at least one (meth)acryloyloxy group and hydroxy group in a molecule with an isocyanate compound obtained by reacting polyols with polyisocyanate.

Examples of (meth)acrylate monomers having at least one (meth) acryloyloxy group and hydroxy group in a molecule to be used for the above-mentioned urethanization reaction include 2-hydroxyethyl (meth)acrylate, 2-hydroxypropyl (meth)acrylate, 2-hydroxybutyl (meth)acrylate, 2-hydroxy-3-phenoxypropyl (meth)acrylate, glycerin di(meth)acrylate, trimethylolpropane di(meth)acrylate, pentaerythritol tri(meth)acrylate and dipentaerythritol penta(meth)acrylate.

Examples of polyisocyanates to be used for the above-mentioned urethanization reaction include di- or triisocyanates such as hexamethylene diisocyanate, lysine diisocyanate, isophoron diisocyanate, dicyclohexylmethane diisocyanate, tolylene diisocyanate, xylylene diisocyanate, diisocyanate obtained by hydrogenating aromatic diisocyanates among the above diisocyanates such as hydrogenated tolylenediisocyanate and hydrogenated xylylenediisocyanate, triphenylmethane triisocyanate and dimethylenetriphenyl triisocyanate, and polyisocyanates obtained by polymerizing diisocyanates.

Examples of polyols to be used for the above-mentioned urethanization reaction include aromatic polyols, aliphatic polyols, alicyclic polyols, polyesterpolyols and polyetherpolyols. Examples of the aliphatic polyols and alicyclic polyols include 1,4-butanediol, 1,6-hexanediol, neopentylglycol, ethyleneglycol, propyleneglycol, trimethylolethane, trimethylolpropane, dimethylolheptane, dimethylol propionic acid, glycerin and hydrogenated bisphenol A.

Examples of polyesterpolyols include a dehydrating condensation reaction of the above-mentioned polyols with polybasic carboxylic acid or anhydride. Examples of polybasic carboxylic acid include succinic acid or anhydride, adipic acid, maleic acid or anhydride, trimellitic acid or anhydride, hexahydro-phthalic acid or anhydride, phthalic acid or anhydride, isophthalic acid and terephthalic acid.

Examples of polyetherpolyols include, besides polyalkyleneglycol, polyoxyalkylene-modified polyols obtained by a reaction of the above-mentioned polyols or phenols with alkyleneoxide.

The multifunctional polyester (meth)acrylate oligomer can be obtained by dehydrating condensation reaction of (meth) acrylic acid, polybasic carboxylic acid or anhydride and polyols.

Examples of the polybasic carboxylic acid or anhydride to be used for the dehydrating condensation reaction include succinic acid or anhydride, adipic acid, maleic acid or anhydride, itaconic acid or anhydride, trimellitic acid or anhydride, pyromellitic acid or anhydride, hexahydro-phthalic acid or anhydride, phthalic acid or anhydride, isophthalic acid and terephthalic acid.

Examples of polyols to be used for the dehydrating condensation reaction include 1,4-butanediol, 1,6-hexanediol, diethyleneglycol, triethyleneglycol, propyleneglycol, neopentylglycol, dimethylolheptane, dimethylol propionic acid, trimethylolpropane, ditrimethylolpropane, pentaerythritol and dipentaerythritol.

The multifunctional epoxy (meth)acrylate oligomers can be obtained by an addition reaction of polyglycidylether with (meth)acrylic acid. Examples of the polyglycidylether include ethyleneglycol diglycidylether, propyleneglycol diglycidylether, tripropyleneglycol diglycidylether, 1,6-hexanediol diglycidylether and bisphenol A diglycidylether.

As for the photo-polymerization initiator to be used for the present invention, commonly known compounds can be used. Examples of the photo-polymerization initiators include benzoin, benzophenone, benzoin ethylether, benzoin isopropylether, 2,2-dimethoxy-2-phenylacetophenone, 1-hydroxycyclohexyl phenylketone, 2-hydroxy-2-methyl-1-phenylpropane-1-one, azobisisobutyronitrile and benzoyl peroxide. However, the photo-polymerization initiator to be used for the present invention is not particularly limited by the above examples.

As for the methods for coating a coating material onto a layer of the acrylic resin composition of the present invention and/or the polycarbonate resin layer being not co-extruded, a method using a brush or a roll, dipping, flow coating, spray coating, a method using a roll coater or a flow coater and a method taught by Japanese Patent Publication No. 2004-130540 can be applied. The thickness of the hard coat layer cured by heat or an active energy ray is 1-20 $\mu$m, preferably 2-15 $\mu$m, more preferably 3-12 $\mu$m. When the thickness of the hard coat layer is less than l$\mu$m, the effect of improvement in the surface hardness may be insufficient. On the other hand, even if the thickness of the hard coat layer is more than 20$\mu$m, the surface hardness may not be improved any more. In addition, there may be a disadvantage

in cost, and besides, deterioration in impact resistance may be brought about.

It is desirable that the hard coat of the surface wherein the acrylic resin composition is not laminated, which is an interior side in use as a final product, has a crack resistance wherein cracks do not occur under the stress of 20 MPa. When cracks occur under the stress of 20 MPa, cracks may occur on the inside of the product during use, and thus it can hardly be used.

An antireflective layer can be applied on the hard coat layer.

Examples of the preferable antireflective layers include a laminate having two or more layers wherein a high-refractive index layer and a low-refractive index layer are laminated so that the low-refractive layer becomes an outermost layer. Materials forming the high-refractive index layer are not particularly limited and examples thereof include metal oxide such as $TiO_2$, $Y_2O_3$, $La_2O_3$, $ZrO_2$ and $Al_2O_3$.

Materials forming the low-refractive index layer are not particularly limited and examples thereof include metal oxide such as $SiO_2$, $MgF_2$, LiF, $3NaF \cdot AlF_3$, $AlF_3$ and $Na_3AlF_6$ and metal fluoride.

The thickness of the antireflective layer, though depending on its design, is usually in the range wherein the lower limit is 10 nm and the upper limit is 300 nm.

The method for forming the antireflective layer on the hardcoat layer is not particularly limited. Examples thereof include known methods such as sputtering, deposition, plasma CVD, and coating.

(7) Polycarbonate Resin Laminated Body

The acrylic resin composition of the present invention can form a multilayer laminate in combination with a polycarbonate resin to produce a polycarbonate resin laminated body. According to the polycarbonate resin laminated body, the layer formed of the acrylic resin composition of the present invention is applied on one side or both sides of the layer formed of the polycarbonate resin.

The polycarbonate resin laminated body is preferably produced by a multilayer laminating by co-extrusion molding the acrylic resin composition and a polycarbonate resin.

The thickness of the acrylic resin composition layer which is a skin layer of the above-mentioned polycarbonate resin laminated body is preferably 10-100 μm, more preferably 15-80 μm, further preferably 20-70 μm. In case when the thickness is less than 10 μm, transparency and appearance may be impaired. In case when the thickness is more than 100 μm, impact resistance of the polycarbonate resin layer may be remarkably deteriorated and further there may be a disadvantage in cost.

Polycarbonate resins to be used as substrates of a multilayer sheet or a polycarbonate resin laminated body of the present invention are not particularly limited as long as they are obtained by above-mentioned known methods for producing polycarbonates. Examples of the polycarbonate resins include a reaction product of carbonate-forming compounds and divalent phenols (bisphenols).

Examples of bisphenols include 1,1'-biphenyl-4,4'-diol, bis(4-hydroxyphenyl)methane, bis(4-hydroxyphenyl) ether, bis(4-hydroxyphenyl)sulfone, bis(4-hydroxy-3-methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxy-3-t-butylphenyl)propane, 2,2-bis(4-hydroxyphenyl)butane, 1,1-bis(4-hydroxyphenyl)cyclohexane, 1,1-bis(4-hydroxy-3-methylphenyl)cyclohexane, 2,2-bis(4-hydroxy-3-methylphenyl)propane, 2,2-bis (4-hydroxy-3,5-dimethylphenyl)propane, 1,1-bis(4-hydroxyphenyl)-1-phenylethane, bis(4-hydroxyphenyl)diphenylmethane, 2,2-bis(4-hydroxy-3-allylphenyl)propane, 3,3,5-trimethyl-1,1-bis(4-hydroxyphenyl)cyclohexane, 1,1-bis(4-hydroxy-2-methyl-5-t-butylphenyl)-2-methylpropane, 9,9-bis(4-hydroxy-3-ethylphenyl)fluorene, 9,9-bis(4-hydroxy-3-methylphenyl)fluorene, 9,9-bis(4-hydroxyphenyl)fluorene, 1,1-bis(4-hydroxyphenyl)cyclododecane, 1,1-bis(4-hydroxy-3-methylphenyl)cyclododecane, 2,2-bis(4-hydroxyphenyl)hexafluoropropane, 2,2-bis(4-hydroxy-3,5-dimethylbromophenyl)propane, α,ω-bis[3-(o-hydroxyphenyl)propyl]polydimethyldiphenyl random copolymerized siloxane, α,ω-bis[3-(o-hydroxyphenyl)propyl]polydimethylsiloxane, 4,4'-[1,4-phenylene-bis(1-methylethylidene)]bisphenol, and 4,4'-[1,3-phenylene-bis(1-methylethylidene)]bisphenol.

Two or more of these bisphenols can be used in combination with each other. Among them, it is particularly preferable to use a polycarbonate resin derived from 2,2-bis(4-hydroxyphenyl)propane as a substrate.

The polycarbonate resin used as a substrate of the multilayer laminate or the polycarbonate resin laminated body of the present invention has generally a viscosity-average molecular weight of 15,000 to 40,000, more preferably 8,000 to 30,000.

The polycarbonate resin can comprise various commonly used additives. Examples of the additives include an ultraviolet absorbent, an antioxidant, a color protection agent, a flame retardant and a coloring agent.

The thickness of the polycarbonate resin layer is suitably 0.04 to 2.0 mm for the usage regarding the present invention wherein being thinner and lighter and punching moldability are required.

When the thickness of the polycarbonate resin layer is less than 0.04 mm, production of the polycarbonate resin laminated body by co-extrusion may be difficult because of lack of a minimum strength required for molding. When the thickness

thereof is more than 2.0 mm, it is not necessary to use the acrylic resin composition of the present invention because sufficient roll releasability can be achieved by optimization of the molding conditions using an acrylic resin composition comprising a conventional lubricant. It is to be understood that the acrylic resin composition of the present invention can be used even when the thickness thereof goes beyond 2.0 mm.

## Examples

The present invention will be described in more detail below referring to Examples. In addition, "%" described below means "% by weight", unless otherwise noted.

<Preliminary Polymerization 1>

912 g (4.00 mol) of 2,2-bis(4-hydroxyphenyl)propane, 815 g (3.81 mol) of diphenylcarbonate and 3.5 X $10^{-5}$ g (4.2 X $10^{-7}$ mol) of sodium hydrogen carbonate were charged into a four-neck flask of 3 liter equipped with a stirrer and a distillation equipment, and then the mixture was heated at 220˚C in a nitrogen atmosphere. The pressure inside was then reduced for 1 hour to adjust the degree of decompression of 0.28 mmHg, and transesterification reaction was carried out for 4 hours under these conditions. After completion of the reaction, nitrogen gas was blown into the reaction vessel to return to the normal pressure and a polycarbonate resin thus produced was extracted.

The intrinsic viscosity of the polymer at 20˚C as a solution of the concentration of 0.5g/dl using methylene chloride as a solvent was 0.21 dl/g. The result of measurement of the concentration of terminal hydroxyl groups by titan tetrachloride color developing method using a spectrophotometer was 1.21% by weight. The results of measurement of the amount of residual monomers by a gel-permeation chromatography were less than 100 ppm respectively. The obtained polymer was analyzed by means of infrared absorption spectrometry, and as a result, the absorption due to a carbonyl group was observed at a position near 1,770 $cm^{-1}$ and the absorption due to an ether bond was observed at a position near 1,240 $cm^{-1}$. Thus, it was confirmed that the polymer was a polycarbonate resin having a carbonate bond.

<Preliminary Polymerization 2>

The reaction was carried out in the same manner as the above-mentioned Preliminary Polymerization 1 except for 1072 g of 1,1-bis(4-hydroxyphenyl)cyclohexane was used in place of 2,2-bis(4-hydroxyphenyl)propane.

<Preliminary Polymerization 3>

The reaction was carried out in the same manner as the above-mentioned Preliminary Polymerization 1 except for 1184 g of 1,1-bis(4-hydroxy-3-methylphenyl) cyclohexane was used in place of 2,2-bis(4-hydroxyphenyl)propane.

<Preliminary Polymerization 4>

The reaction was carried out in the same manner as the above-mentioned Preliminary Polymerization 1 except for 1024 g of 2,2-bis(4-hydroxy-3-methylphenyl)propane was used in place of 2,2-bis(4-hydroxyphenyl)propane.

<Preliminary Polymerization 5>

The reaction was carried out in the same manner as the above-mentioned Preliminary Polymerization 1 except for 856 g of 1,1-bis(4-hydroxyphenyl)ethane was used in place of 2,2-bis(4-hydroxyphenyl)propane.

<Preliminary Polymerization 6>

The reaction was carried out in the same manner as the above-mentioned Preliminary Polymerization 1 except for 112 g of 1,1'-biphenyl-4,4'-diol and 680 g of bis(4-hydroxyphenyl)methane were used in place of 2,2-bis(4-hydroxyphenyl)propane.

<Preliminary Polymerization 7>

The reaction was carried out in the same manner as the above-mentioned Preliminary Polymerization 1 except for using 800 g of 2,2-bis(4-hydroxyphenyl)propane and 525 g of α,ω-bis[3-(O-hydroxyphenyl)propyl]polydimethylsiloxane having average number of recurring units of 10, manufactured by Dow Corning Toray Co., Ltd., in place of using 912 g of 2,2-bis(4-hydroxyphenyl)propane.

<Example of Synthesis 1>

3 liter of methylene chloride, 267 g of bis (2,4-dinitrophenyl) carbonate and 308 g of a silicone compound represented by the following structural formula, manufactured by Chisso Corporation, (hereinafter "S1") were charged into a 5-liter beaker and were mixed by stirring at room temperature with each other to obtain a mixed solution.

[Chemical Formula 18]

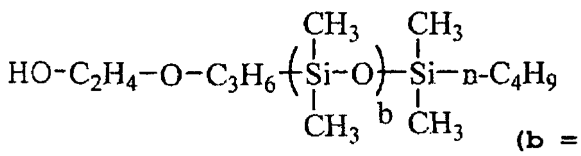

(b = 4 on the average)

A solution obtained by dissolving 73.7g of triethylamine in 500 ml of methylene chloride was dropped into the mixed solution slowly spending 1.5 hours and then the solution was stirred to carry out reaction. Then, after stirring for 1 hour, a solution obtained by dissolving 500g of polycarbonate obtained by Preliminary Polymerization 1, 73.7g of triethylamine and 2.5g of 4-(dimethylamino)pyridine in 3.5 liter of methylene chloride was dropped slowly into the reaction solution spending 2.5 hours and mixed by stirring. Furthermore, after stirring for 3 hours, the reaction solution was washed with 3.5 kg of 1N-hydrochloric acid and then was washed repeatedly with 3.5 kg of 0. 5N-sodium hydroxide solution for 4 times. Finally, the reaction solution was washed with 3.5 kg of 1N-hydrochloric acid and then with 7.4 kg of purified water.

Subsequently, methylene chloride was removed from the reaction solution by using an evaporator. The residual was washed with 3 liter of methanol and then with 3 liter of hexane. The residual after washing was dried in vacuum at 40˚C to obtain a polymer as intended.

The intrinsic viscosity of the polymer at 20 ˚C as a solution of the concentration of 0.5g/dl using methylene chloride as a solvent was 0.22 dl/g. The result of measurement of the concentration of terminal hydroxyl groups by titan tetrachloride color developing method using a spectrophotometer was less than 0.01% by weight.

The obtained polymer was analyzed by means of infrared absorption spectrometry, and as a result, the absorption due to a carbonyl group was observed at a position near 1,770 $cm^{-1}$ and the absorption due to an ether bond was observed at a position near 1,240 $cm^{-1}$. In addition, as a result of XPS analysis, it was confirmed that the polymer has Si atoms. According to the above results, it was confirmed that the polymer was a terminal-modified polycarbonate resin represented by the following structural formula (hereinafter "A1").

[Chemical Formula 19]

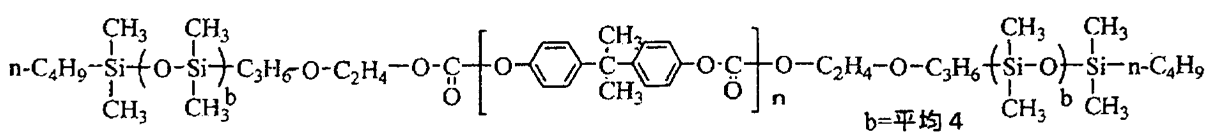

(b = 4 on the average)

<Example of Synthesis 2>

The reaction was carried out in the same manner as in Example of synthesis 1 except for using polycarbonate obtained by Preliminary Polymerization 2 in place of polycarbonate obtained by Preliminary Polymerization 1, changing the amount of bis(2,4-dinitrophenyl)carbonate to 230g and changing the amount of S1 to 263g.

The intrinsic viscosity of the polymer thus obtained was 0.22 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A2").

[Chemical Formula 20]

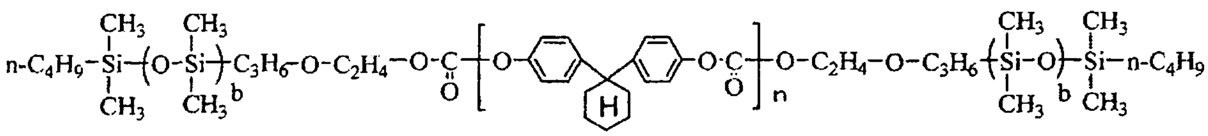

(b = 4 on the average)

<Example of Synthesis 3>

Synthesis was carried out in the same manner as in Example of synthesis 1 except for using 264g of a silicone compound represented by the following structural formula, manufactured by Chisso Corporation (hereinafter "S2"), in place of S1.

[Chemical Formula 21]

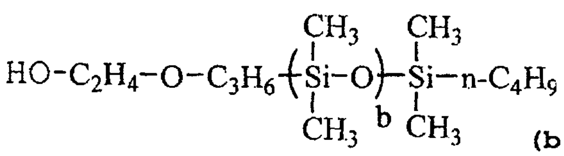

(b = 3 on the average)

The intrinsic viscosity of the polymer thus obtained was 0.21 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A3").

[Chemical Formula 22]

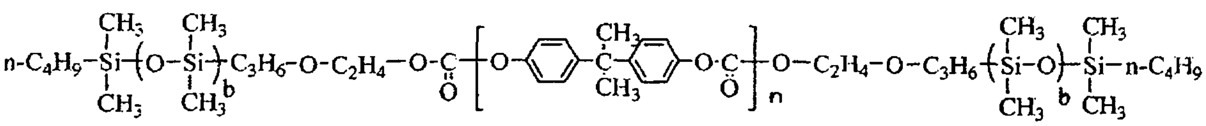

(b = 3 on the average)

<Example of Synthesis 4>

Synthesis was carried out in the same manner as in Example of synthesis 1 except for using 531g of a silicone

compound represented by the following structural formula, manufactured by Chisso Corporation (hereinafter "S3"), in place of S1.

[Chemical Formula 23]

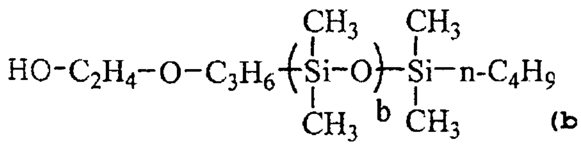

(b = 9 on the average)

The intrinsic viscosity of the polymer thus obtained was 0.22 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A4").

[Chemical Formula 24]

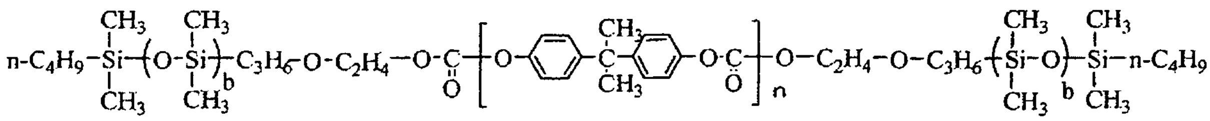

(b = 9 on the average)

<Example of Synthesis 5>

The reaction was carried out in the same manner as in Example of synthesis 1 except for using polycarbonate obtained by Preliminary Polymerization 3 in place of polycarbonate obtained by Preliminary Polymerization 1, changing the amount of bis(2,4-dinitrophenyl)carbonate to 207g and changing the amount of S1 to 237g.

The intrinsic viscosity of the polymer thus obtained was 0.22 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A5").

[Chemical Formula 25]

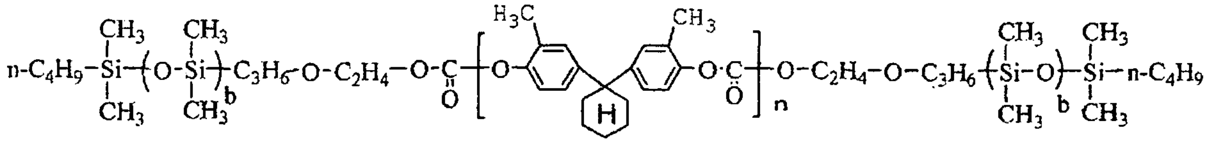

(b = 4 on the average)

<Example of Synthesis 6>

The reaction was carried out in the same manner as in Example of synthesis 1 except for using polycarbonate

obtained by Preliminary Polymerization 4 in place of polycarbonate obtained by Preliminary Polymerization 1, changing the amount of bis(2,4-dinitrophenyl)carbonate to 238g and changing the amount of S1 to 274g.

The intrinsic viscosity of the polymer thus obtained was 0.21 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A6").

[Chemical Formula 26]

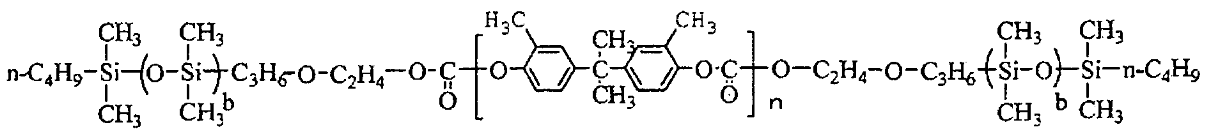

(b = 4 on the average)

<Example of Synthesis 7>

The reaction was carried out in the same manner as in Example of synthesis 1 except for using polycarbonate obtained by Preliminary Polymerization 5 in place of polycarbonate obtained by Preliminary Polymerization 1, changing the amount of bis(2,4-dinitrophenyl)carbonate to 288g and changing the amount of S1 to 333g.

The intrinsic viscosity of the polymer thus obtained was 0.23 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A7").

[Chemical Formula 27]

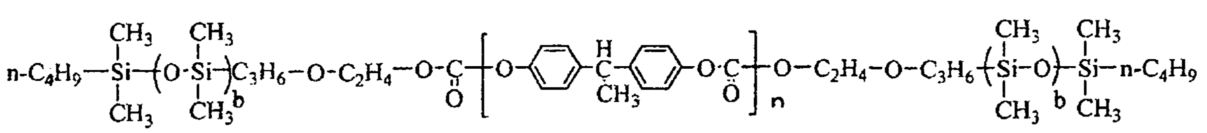

(b = 4 on the average)

<Example of Synthesis 8>

The reaction was carried out in the same manner as in Example of synthesis 1 except for using polycarbonate obtained by Preliminary Polymerization 6 in place of polycarbonate obtained by Preliminary Polymerization 1.

The intrinsic viscosity of the polymer thus obtained was 0.19 dl/g. The concentration of terminal hydroxyl groups was less than 0.01% by weight. As the results of infrared absorption spectrometry and XPS analysis, it was confirmed that the polymer was a terminal-modified polycarbonate resin represented by the following structural formula (hereinafter "A8").

[Chemical Formula 28]

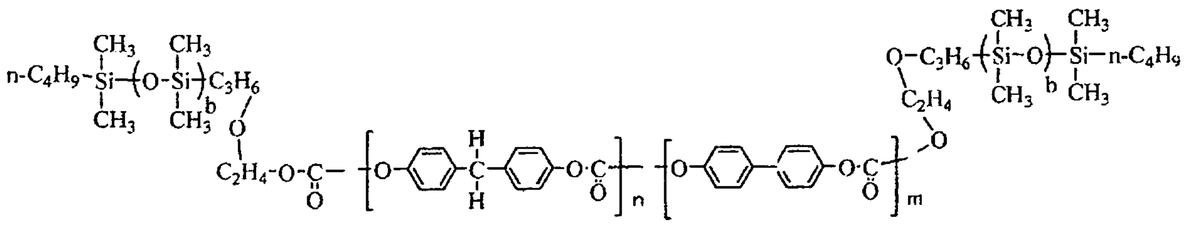

(b = 4 on the average)

<Example of Synthesis 9>

The reaction was carried out in the same manner as in Example of synthesis 1 except for using polycarbonate obtained by Preliminary Polymerization 7 in place of polycarbonate obtained by Preliminary Polymerization 1, using 90g of p-t-butylphenol, manufactured by Dainippon Ink and Chemicals, in place of S1.
The intrinsic viscosity [η] of the polymer thus obtained was 0.20 dl/g. As the results of infrared absorption spectrometry and fluorescent X-ray analysis, it was confirmed that the polymer was a polycarbonate polymer represented by the following structural formula.
[Chemical Formula 29]

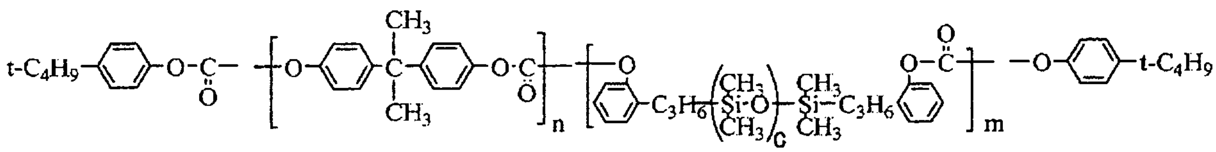

The terminal silicone-modified polycarbonate resins obtained by the above Examples of synthesis was examined and evaluated by means of the following methods:

1) Evaluation of Roll Staining:

The degree of accumulation of lubricants on the first roll was evaluated by visual observation according to the following criteria:

○: Deterioration of sheet appearance by roll staining was not observed after production process of multilayer sheets was continued for 8 hours.
Δ: Deterioration of sheet appearance by roll staining was not observed after production process of multilayer sheets was continued for 1 hour, but deterioration of sheet appearance by roll staining was observed after production process of multilayer sheets was continued for 8 hours.
×: Deterioration of sheet appearance by roll staining was observed after production process of multilayer sheets was continued for 1 hour.

2) High-temperature High-humidity Resistance Test

The sheet obtained by Examples and Comparative Examples are placed in a condition at 80°C and 85% RH for 200 hours, and then the degree of whitening of the acrylic resin composition layer was determined by visual observation of the acrylic resin composition layer in the thickness direction according to the following criteria:

O: Whitening was not observed.

Δ: Whitening was slightly observed.
×: Whitening was apparently observed.

3) Evaluation of releasability

The releasability on the third roll was evaluated by determining the peeling angle from the roll according to the following criteria, on the assumption that the ideal peeling position is an angle of 90 degrees for the horizontal direction:
○: The sheet is highly stable and the peeling position is not varied even after a continuous molding for 8 hours.

Δ: After the continuous molding for 8 hours, the peeling position comes down and the sheet becomes unstable, and therefore, deterioration of appearance (or a release mark) caused by variance of the peeling position was observed
×: The peeling position comes down before completing the 8-hour continuous molding and the sheet is winded to the third polishing roll to stop the molding machine.

4) Evaluation of Surface Slidability:

After wiping the acrylic resin composition layer of the multilayer sheet lightly with a cotton bud containing methanol, the sheet was dried in air, and then the coefficient of static friction thereof was measured and evaluated by a measuring device, tradename; "94iII", manufactured by Shinto Scientific Co., Ltd.,

5) Evaluation of Water Repellency:

After wiping the acrylic resin composition layer of the multilayer sheet lightly with a cotton bud containing methanol, the sheet was dried in air, and then an angle of contact was measured by purified water and evaluated.
The lubricants, polycarbonate resins and acrylic resins used in Examples and Comparative Examples are as follows:

1) Lubricants:

SPC1: The terminal silicone-modified polycarbonate obtained by Example of Synthetic 1 (Content of Si elements = 10.3% by weight)
SPC2: The terminal silicone-modified polycarbonate obtained by Example of Synthetic 2 (Content of Si elements = 9.3% by weight)
SPC3: The terminal silicone-modified polycarbonate obtained by Example of Synthetic 3 (Content of Si elements = 8.7% by weight)
SPC4: The terminal silicone-modified polycarbonate obtained by Example of Synthetic 4 (Content of Si elements = 16.1% by weight)
SPC5: The terminal silicone-modified polycarbonate obtained by Example of Synthetic 5 (Content of Si elements = 8.4% by weight)
SPC6: The terminal silicone-modified polycarbonate obtained by Example of Synthetic 6 (Content of Si elements = 9.5% by weight)
SPC7: The terminal silicone-modified polycarbonate obtained by Example of Synthetic 7 (Content of Si elements = 10.7% by weight)
SPC8: The terminal silicone-modified polycarbonate obtained by Example of Synthetic 8 (Content of Si elements = 11.2% by weight)
SPC9: The main chain silicone-modified polycarbonate obtained by Example of Synthetic 9 (Content of Si elements = 9.1% by weight.
Content of terminal Si elements = 0% by weight.)
Lubricant A: Ethylene bis stearic acid amide, trademark;
"LIGHT-AMIDE", manufactured by KYOEISHA CHEMICALS Co, LTD.
Lubricant B: Stearic acid monoglyceride, manufactured by Kishida Chemical Co., Ltd.
Lubricant C: Silicone oil, tradename; "KF-96-30cs", manufactured by Shin-Etsu Chemical Co., Inc.
Lubricant D: Stearyl alcohol, manufactured by Wako Pure Chemical Industries, Ltd.

2) Polycarbonate Resin:

A polycarbonate resin derived from bisphenol A as bisphenols, tradename; "Iupilon E-2000", manufactured by Mitsubishi Gas Chemical Company, Inc., wherein "Iupilon" is a registered trademark, having viscosity-average molecular weight of 27,000 was used.

3) Acrylic Resin:

Polymethylmethacrylate, tradename; "Altuglas V020", manufactured by ARKEMA, having weight average molecular weight of 100,000, was used as an acrylic resin. The acrylic resin was blended with the lubricant before extrusion.

<Examples 1-10 and Comparative Examples 1-6>

The acrylic resin and the lubricants shown in Table 1 were blended with each other to prepare an acrylic resin composition. The amounts of the lubricants blended with the acrylic resin are also shown in Table 1.
The extruder for the polycarbonate resin layer was set up as follows: barrel diameter = 65mm, screw L/D=35, cylinder temperature = 270˚C. The extruder for the acrylic resin composition layer to form coating layers on the both sides of the polycarbonate resin layer was set up as follows: barrel diameter = 32mm, screw L/D=32, cylinder temperature = 250˚C. The two resins are melt-extruded at the same time and a feed block was used to laminate to form a laminate wherein the acrylic resin composition layers were formed on both sides of the polycarbonate resin layer.
The inside temperature of the die head was set to 260 ˚C. The resins which was laminated and combined with each other in the die were induced to three mirror-finished polishing rolls placed horizontally. Of the three polishing rolls, the temperature of the first roll was set to 110 ˚C, the temperature of the second roll was set to 140 ˚C and the temperature of the third roll was set to 180˚C. The bank was formed at the interval of the first roll which the resins were firstly flowed in, and then the resins were passed through the second and third rolls . The withdrawing rate of the first roll and the second roll were 2.5m/min, the withdrawing rate of the third roll was 2.6m/min and the speed of the pinch roll for withdrawing was 2.7m/min.
The sheet thus obtained had the thickness of 0.5mm. The thicknesses of both of the coating layers formed of the acrylic resin composition were respectively 20 μm. The results of the evaluations were shown in Table 1.
According to Table 1, it is apparent that the multilayer sheet of the present invention having the polycarbonate resin layer and the acrylic resin composition layers is excellent in releasability, high-temperature high-humidity resistance, surface slidability and water repellency.

<Examples 11-12, Comparative Examples 7-8>

99 parts by weight of methyl methacrylate manufactured by Mitsubishi Gas Chemical Company, Inc., 0.5 parts by weight of pentaerythritol tetraacrylate manufactured by DAICEL-CYTEC COMPANY, LTD. and 0.5 parts by weight of 2-methyl-1-[4-(methylthio)phenyl]-2-morphorinopropane-1-one, tradename; "IRGACURE 907", manufactured by Ciba Specialty Chemicals Inc., were mixed with each other to obtain a methylmethacrylate mixed solution. Subsequently, the lubricant of the present invention was added to the mixed solution to obtain a mixed coating solution. The mixed coating solution was then coated on the surface of a polycarbonate sheet having the thickness of 0.5 mm with 30 cm wide and 30 cm long, manufactured by Mitsubishi Gas Chemical Company, Inc. , by a bar coater to form a coating layer having the thickness of about 20 μm with 20 cm wide and 20 cm long. After coating, the coated surface was subj ected to an UV irradiation for 30 seconds by a metal halide lamp, trade name; "MAL-250NL", manufactured by Nippondenchi, having irradiation energy of 80 W/cm to carry out curing.
The amounts of the lubricants mixed with the methylmethacrylate solution in Examples 11-12 and Comparative Examples 7-8 were shown in Table 2. According to Table 2, it is apparent that the multilayer sheet of the present invention comprising acrylic resin composition layers and a polycarbonate . resin layer of the present invention is excellent in surface slidability and water repellency.

**[Table 1]**

Table 1

| Examples | Lubricants | Amount of Lubricants (wt%) *1 | Roll Staining | Releasability | High-temperature High-humidity Resistance | Coefficient of Static Friction (μ) | Angle of Contact (°) |
|---|---|---|---|---|---|---|---|
| 1 | SPC1 | 3.0 | ○ | ○ | ○ | 0.22 | 94 |
| 2 | SPC2 | 5.0 | ○ | ○ | ○ | 0.19 | 96 |
| 3 | SPC3 | 7.0 | ○ | ○ | ○ | 0.17 | 95 |
| 4 | SPC4 | 1.0 | ○ | ○ | ○ | 0.26 | 89 |
| 5 | SPCS | 3.0 | ○ | ○ | ○ | 0.22 | 93 |
| 6 | SPC6 | 3.0 | ○ | ○ | ○ | 0.24 | 92 |
| 7 | SPC7 | 3.0 | ○ | ○ | ○ | 0.23 | 94 |
| 8 | SPC8 | 3.0 | ○ | ○ | ○ | 0.24 | 93 |
| 9 | SPC1+A | 2.8+0.2 (A) | ○ | ○ | ○ | 0.21 | 95 |
| 10 | SPC1+D | 2.4+0.4 (D) | ○ | ○ | ○ | 0.23 | 93 |
| Comparative Example | | | | | | | |
| 1 | -- | -- | *2 | × | ○ | 0.45 | 70 |
| 2 | A | 3.0 | × | ○ | × | 0.40 | 80 |
| 3 | B | 3.0 | × | ○ | × | 0.40 | 80 |
| 4 | C | 3.0 | × | ○ | × | 0.36 | 83 |
| 5 | D | 3.0 | × | ○ | × | 0.44 | 70 |
| 6 | SPC9 | 3.0 | ○ | Δ | ○ | 0.30 | 85 |
| *1: Based upon the amount of the acrylic resin.<br>*2: Since roll windings happened often, the extrusion process ceased in 30 minutes. | | | | | | | |

**[Table 2]**

Table 2

| Examples | Lubricants | Amount of Lubricants (wt%)*3 | Coefficient of Static Friction (μ) | Angle of Contact (°) |
|---|---|---|---|---|
| 11 | SPC5 | 3.0 | 0.19 | 97 |
| 12 | SPC6 | 3.0 | 0.20 | 96 |
| Comparative Examples | | | | |
| 7 | -- | -- | 0.46 | 69 |
| 8 | A | 3.0 | 0.41 | 82 |
| *3: Based upon the amount of the methyl methacrylate mixed solution. | | | | |

**Industrial Applicability**

The molded product formed of the acrylic resin composition of the present invention is hardly whitened and can maintain excellent slidability even under the conditions of high temperature and high humidity. Especially, in case

when the acrylic resin composition is laminated with a polycarbonate resin by co-extrusion molding, a multilayer laminate having excellent productivity and environmental stability which is hardly whitened and can maintain excellent appearance and slidability even under the conditions of high temperature and high humidity can be obtained, since roll releasability of the acrylic resin composition layer is improved and roll fouling is significantly reduced. Therefore, the multilayer laminate thus obtained is suitable for usages wherein high scratch resistance and high impact resistance are required such as various materials for windowpanes, optical materials and protection sheets for a LCD and an EL display.

## Claims

1. An acrylic resin composition comprising an acrylic resin as a main component and a terminal-modified polycarbonate resin having terminal groups represented by the following general formula (1):

[Chemical Formula 1]

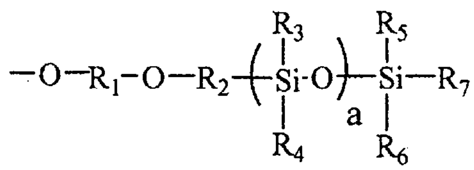

(1)

wherein each of $R_1$ to $R_2$ independently represents an alkylene group having 1-20 carbon atoms, each of $R_3$ to $R_7$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "a" represents an integer of 1 to 1000.

2. The acrylic resin composition according to claim 1, wherein the content of said terminal-modified polycarbonate resin is 0.1 to 15% by weight based upon the total amount of the acrylic resin composition.

3. The acrylic resin composition according to claim 1 or 2, wherein said terminal-modified polycarbonate resin has the intrinsic viscosity of 0.05 to 1.0 dl/g.

4. The acrylic resin composition according to any one of claims 1 to 3, wherein each of $R_3$ to $R_7$ in said general formula (1) independently represents a methyl group, a butyl group or a phenyl group.

5. The acrylic resin composition according to any one of claims 1 to 4, wherein each of $R_1$ to $R_2$ in said general formula (1) independently represents an alkylene group having 1-6 carbon atoms.

6. The acrylic resin composition according to any one of claims 1 to 5, wherein "a" in said general formula (1) represents an integer of 4 to 100.

7. The acrylic resin composition according to any one of claims 1 to 6, wherein said terminal-modified polycarbonate resin has recurring units represented by the following general formula (2):

[Chemical Formula 2]

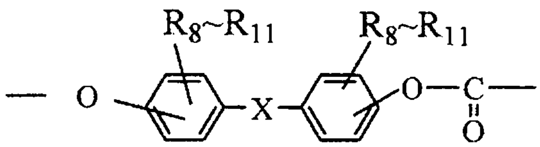 (2)

wherein each of $R_8$ to $R_{11}$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "X" represents a group selected from the group consisting of the following divalent organic groups represented by the following formulae:

[Chemical Formula 3]

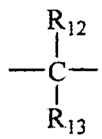 , $-S-$ , $-(CH_2)_b-$ , $-O-$ , $-SO-$ , $-CO-$ , $-SO_2-$ ,

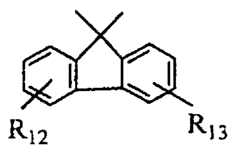 , 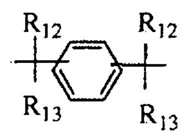 , 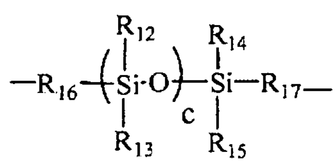

wherein each of $R_{12}$ to $R_{15}$ independently represents a hydrogen atom, a fluorine atom, a chlorine atom, a bromine atom, an iodine atom, an alkyl group having 1-9 carbon atoms, an alkoxy group having 1-5 carbon atoms, an aryl group having 6-12 carbon atoms or a group wherein $R_{12}$ to $R_{15}$ are combined with each other to form a carbocyclic ring or a heterocyclic ring, each of $R_{16}$ to $R_{17}$ independently represents an alkylene group having 1-20 carbon atoms, "b" represents an integer of 0 to 20 and "c" represents an integer of 1 to 1000.

**8.** The acrylic resin composition according to claim 7, wherein said recurring units represented by the general formula (2) are derived from 2,2-bis(4-hydroxyphenyl)propane, 1,1-bis(4-hydroxyphenyl)cyclohexane, 1,1-bis(4-hydroxy-3-methylphenyl)cyclohexane, 2,2-bis(4-hydroxy-3-methyphenyl)propane, 1,1-bis(4-hydroxyphenyl)ethane, bis(4-hydroxyphenyl)methane or 1,1'-biphenyl-4,4'-diol.

**9.** The acrylic resin composition according to claim 7 or 8, wherein the average degree of polymerization of said recurring units represented by the general formula (2) is 7 to 200.

**10.** The acrylic resin composition according to any one of claims 1 to 9, wherein said acrylic resin is derived from monomers containing as a main component an acrylic monomer selected from the group consisting of acrylic acids, acrylates and methacrylates.

**11.** The acrylic resin composition according to claim 10, wherein said acrylic resin is a polymethylmethacrylate copolymer.

**12.** The acrylic resin composition according to any one of claims 1 to 11, **characterized in that** it further comprises fatty acid amides and/or higher alcohols.

**13.** A molded product obtained by molding the acrylic resin composition according to any one of claims 1 to 12.

**14.** The molded product according to claim 13, which is a film or a sheet.

**15.** A multilayer laminate comprising at least a layer formed of the acrylic resin composition according to any one of claims 1 to 12 and a layer formed of other resins.

**16.** The multilayer laminate according to claim 15, which is a polycarbonate resin laminated body wherein a polycarbonate resin is used as said other resins and a layer formed of said acrylic resin composition is laminated to one side or both sides of the layer formed of said polycarbonate resin.

**17.** The multilayer laminate according to claim 15 or 16, **characterized in that** it further comprises a hard coat layer.

**18.** A process for producing the acrylic resin composition according to any one of claims 1 to 12, which comprises a step of mixing an acrylic monomer with a terminal-modified polycarbonate resin having terminal groups represented by the following general formula (1), and subsequently polymerizing said acrylic monomer by heating or light irradiation:

[Chemical Formula 4]

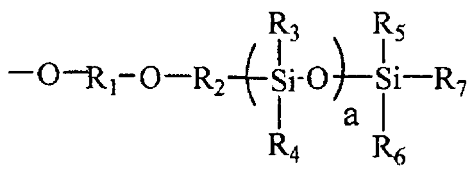 (1)

wherein each of $R_1$ to $R_2$ independently represents an alkylene group having 1-20 carbon atoms, each of $R_3$ to $R_7$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "a" represents an integer of 1 to 1000.

**19.** A process for producing a multilayer laminate comprising at least a layer formed of the acrylic resin composition according to any one of claims 1 to 12 and a layer formed of other resins, which comprises a step wherein the resin forming the layer of other resins is molded by co-extrusion molding with said acrylic resin composition.

**20.** A process for producing a multilayer laminate comprising at least a layer formed of the acrylic resin composition according to any one of claims 1 to 12 and a layer formed of other resins, which comprises a step of coating on the surface of the layer formed of other resins a mixture of an acrylic monomer with a terminal-modified polycarbonate resin having terminal groups represented by the following general formula (1), and subsequently polymerizing said acrylic monomer contained in the mixture by heating or light irradiation:

[Chemical Formula 5]

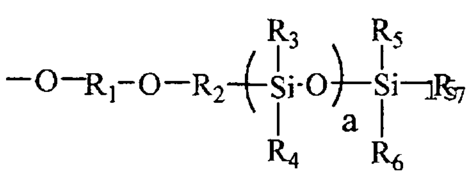 (1)

wherein each of $R_1$ to $R_2$ independently represents an alkylene group having 1-20 carbon atoms, each of $R_3$ to $R_7$ independently represents a hydrogen atom, a fluorine atom, a chlorine atom, a bromine atom, an iodine atom, an alkyl group having 1-9 carbon atoms, an aryl group having 6-12 carbon atoms, an alkenyl group having 2-5 carbon atoms, an alkoxy group having 1-5 carbon atoms or an aralkyl group having 7-17 carbon atoms, and "a" represents an integer of 1 to 1000.

**Patentansprüche**

1. Acrylharzzusammensetzung, welche ein Acrylharz als Hauptkomponente und ein endständig modifiziertes Polycarbonatharz mit Endgruppen der folgenden allgemeinen Formel (1) umfasst:

Chemische Formel 1:

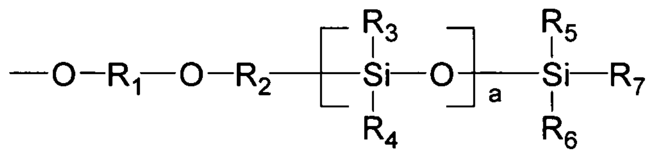

(1)

wobei jedes $R_1$ bis $R_2$ unabhängig eine Alkylengruppe mit 1 bis 20 Kohlenstoffatomen darstellt, jedes $R_3$ bis $R_7$ unabhängig ein Wasserstoffatom, ein Fluoratom, ein Chloratom, ein Bromatom, ein Iodatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellt und "a" eine ganze Zahl von 1 bis 1.000 darstellt.

2. Acrylharzzusammensetzung gemäss Anspruch 1, wobei der Gehalt des endständig modifizierten Polycarbonatharzes 0,1 bis 15 Gew.%, bezogen auf die Gesamtmenge der Acrylharzzusammensetzung, beträgt.

3. Acrylharzzusammensetzung gemäss Anspruch 1 oder 2, wobei das endständig modifizierte Polycarbonatharz eine intrinsische Viskosität von 0,05 bis 1,0 dl/g hat.

4. Acrylharzzusammensetzung gemäss einem der Ansprüche 1 bis 3, wobei jedes $R_3$ bis $R_7$ in der allgemeinen Formel (1) unabhängig eine Methylgruppe, eine Butylgruppe oder eine Phenylgruppe darstellt.

5. Acrylharzzusammensetzung gemäss einem der Ansprüche 1 bis 4, wobei jedes $R_1$ bis $R_2$ in der allgemeinen Formel (1) unabhängig eine Alkylengruppe mit 1 bis 6 Kohlenstoffatomen darstellt.

6. Acrylharzzusammensetzung gemäss einem der Ansprüche 1 bis 5, wobei "a" in der allgemeinen Formel (1) eine ganze Zahl von 4 bis 100 darstellt.

7. Acrylharzzusammensetzung gemäss einem der Ansprüche 1 bis 6, wobei das endständig modifizierte Polycarbonatharz Wiederholungseinheiten der folgenden allgemeinen Formel (2) hat:

Chemische Formel 2:

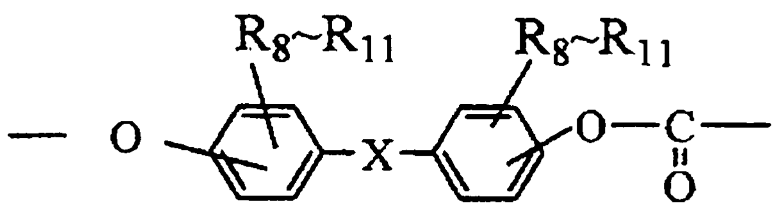

(2)

wobei jedes $R_8$ bis $R_{11}$ unabhängig ein Wasserstoffatom, ein Fluoratom, ein Chloratom, ein Bromatom, ein Iodatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellt und "X" eine Gruppe darstellt, welche aus der Gruppe bestehend aus den folgenden divalenten organischen Gruppen der folgenden Formeln ausgewählt wird:

Chemische Formel 3:

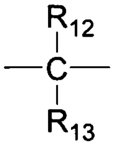, $-S-$, $-(CH_2)_b-$, $-O-$, $-SO-$, $-CO-$, $-SO_2-$,

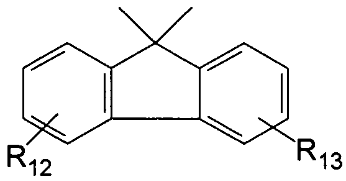, 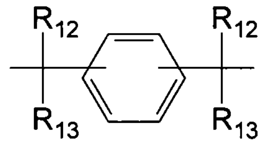, 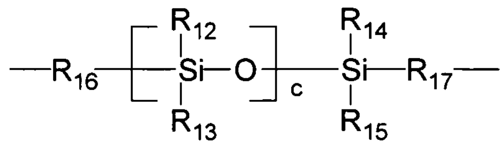

wobei jedes $R^{12}$ bis $R^{15}$ unabhängig ein Wasserstoffatom, ein Fluoratom, ein Chloratom, ein Bromatom, ein Iodatom, eine Alkylgruppe mit 1 bis 9 Kohlenstoffatomen, eine Alkoxygruppe mit 1 bis 5 Kohlenstoffatomen, eine Arylgruppe mit 6 bis 12 Kohlenstoffatomen oder eine Gruppe, bei der $R^{12}$ bis $R^{15}$ miteinander verbunden sind und einen carbocyclischen Ring oder heterocyclischen Ring bilden, darstellt, jedes $R_{16}$ bis $R_{17}$ unabhängig eine Alkylengruppe mit 1 bis 20 Kohlenstoffatomen darstellt, "b" eine ganze Zahl von 0 bis 20 darstellt und "c" eine ganze Zahl von 1 bis 1.000 darstellt.

**8.** Acrylharzzusammensetzung gemäss Anspruch 7, wobei die Wiederholungseinheiten der allgemeinen Formel (2) abgeleitet sind von 2,2-Bis(4-hydroxyphenyl)propan, 1,1-Bis(4-hydroxyphenyl)cyclohexan, 1,1-Bis(4-hydroxy-3-methylphenyl)cyclohexan, 2,2-Bis(4-hydroxy-3-methylphenyl)propan, 1,1-Bis(4-hydroxyphenyl)ethan, Bis(4-hydroxyphenyl)methan oder 1,1'-Biphenyl-4,4'-diol.

**9.** Acrylharzzusammensetzung gemäss Anspruch 7 oder 8, wobei der mittlere Polymerisationsgrad der Wiederholungseinheiten der allgemeinen Formel (2) 7 bis 200 ist.

**10.** Acrylharzzusammensetzung gemäss einem der Ansprüche 1 bis 9, wobei das Acrylharz von Monomeren abgeleitet ist, welche als Hauptkomponente ein Acrylmonomer, ausgewählt aus der Gruppe bestehend aus Acrylsäuren, Acrylaten und Methacrylaten, enthalten.

**11.** Acrylharzzusammensetzung gemäss Anspruch 10, wobei das Acrylharz ein Polymethylmethacrylat-Copolymer ist.

**12.** Acrylharzzusammensetzung gemäss einem der Ansprüche 1 bis 11, **dadurch gekennzeichnet, dass** sie weiterhin Fettsäureamide und/oder höhere Alkohole umfasst.

**13.** Formteil, welches durch Formgebung der Acrylharzzusammensetzung gemäss einem der Ansprüche 1 bis 12 erhalten wird.

**14.** Formteil gemäss Anspruch 13, welches ein Film oder Blatt ist.

**15.** Mehrschichtlaminat, welches mindestens eine Schicht, die aus der Acrylharzzusammensetzung gemäss einem der Ansprüche 1 bis 12 gebildet ist, und eine Schicht, die aus anderen Harzen gebildet ist, umfasst.

**16.** Mehrschichtlaminat gemäss Anspruch 15, welches ein laminierter Körper mit Polycarbonatharz ist, wobei ein Polycarbonatharz als das andere Harz verwendet wird, und eine Schicht, die aus der Acrylharzzusammensetzung gebildet ist, auf eine Seite oder beide Seiten der aus dem Polycarbonat gebildeten Schicht laminiert wird.

**17.** Mehrschichtlaminat gemäss Anspruch 15 oder 16, **dadurch gekennzeichnet, dass** es weiterhin eine Hartüberzugsschicht umfasst.

**18.** Verfahren zur Herstellung der Acrylharzzusammensetzung gemäss einem der Ansprüche 1 bis 12, welches einen Schritt umfasst, in dem ein Acrylmonomer mit einem endständig modifizierten Polycarbonatharz mit Endgruppen

der folgenden allgemeinen Formel (1) gemischt wird, und anschliessend das Acrylmonomer durch Erwärmung oder Lichtbestrahlung polymerisiert wird:

Chemische Formel 4:

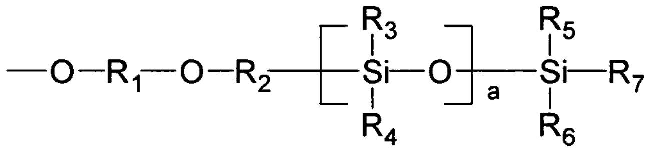

( 1 )

wobei jedes $R_1$ bis $R_2$ unabhängig eine Alkylengruppe mit 1 bis 20 Kohlenstoffatomen darstellt, jedes $R_3$ bis $R_7$ unabhängig ein Wasserstoffatom, ein Fluoratom, ein Chloratom, ein Bromatom, ein Iodatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellt und "a" eine ganze Zahl von 1 bis 1.000 darstellt.

**19.** Verfahren zur Herstellung eines Mehrschichtlaminats, welches mindestens eine Schicht, die aus der Acrylharzzusammensetzung gemäss einem der Ansprüche 1 bis 12 gebildet ist, und eine Schicht, die aus anderen Harzen gebildet ist, umfasst, welches einen Schritt umfasst, worin das Harz, welches die Schicht der anderen Harze bildet, durch Coextrusionsformgebung mit der Acrylharzzusammensetzung geformt wird.

**20.** Verfahren zur Herstellung eines Merhschichtlaminats, welches mindestens eine Schicht, die aus der Acrylharzzusammensetzung gemäss einem der Ansprüche 1 bis 12 gebildet ist, und eine Schicht, die aus anderen Harzen gebildet ist, umfasst, welches einen Schritt umfasst, worin eine Mischung eines Acrylmonomers mit einem endständig modifizierten Polycarbonatharz mit Endgruppen der folgenden allgemeinen Formel (1) auf die Oberfläche der aus anderen Harzen gebildeten Schicht aufgetragen wird, und anschliessend das in der Mischung enthaltene Acrylmonomer durch Erwärmung oder Lichtbestrahlung polymerisiert wird:

Chemische Formel 5:

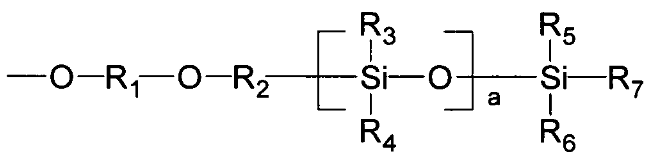

( 1 )

wobei jedes $R_1$ bis $R_2$ unabhängig eine Alkylengruppe mit 1 bis 20 Kohlenstoffatomen darstellt, jedes $R_3$ bis $R_7$ unabhängig ein Wasserstoffatom, ein Fluoratom, ein Chloratom, ein Bromatom, ein Iodatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellt und "a" eine ganze Zahl von 1 bis 1.000 darstellt.

**Revendications**

**1.** Composition de résine acrylique comprenant une résine acrylique comme composant principal et une résine de polycarbonate aux extrémités modifiées ayant des groupes terminaux représentés par la formule générale (1) suivante :

[Formule chimique 1]

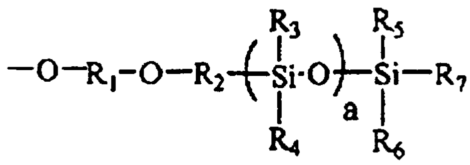

(1)

dans laquelle chacun de $R_1$ à $R_2$ représente, de manière indépendante, un groupe alkylène possédant 1 à 20 atomes de carbone, chacun de $R_3$ à $R_7$ représente, de manière indépendante, un atome d'hydrogène, un atome de fluor, un atome de chlore, un atome de brome, un atome d'iode, un groupe alkyle possédant 1 à 9 atomes de carbone, un groupe aryle possédant 6 à 12 atomes de carbone, un groupe alcényle possédant 2 à 5 atomes de carbone, un groupe alcoxy possédant 1 à 5 atomes de carbone ou un groupe aralkyle possédant 7 à 17 atomes de carbone, et « a » représente un nombre entier de 1 à 1 000.

**2.** Composition de résine acrylique selon la revendication 1, dans laquelle la teneur de ladite résine de polycarbonate aux extrémités modifiées est de 0,1 à 15 % en poids sur la base de la quantité totale de la composition de résine acrylique.

**3.** Composition de résine acrylique selon la revendication 1 ou 2, dans laquelle ladite résine de polycarbonate aux extrémités modifiées a la viscosité intrinsèque de 0,5 à 1,0 dl/g.

**4.** Composition de résine acrylique selon l'une quelconque des revendications 1 à 3, dans laquelle chacun de $R_3$ à $R_7$ dans ladite formule générale (1) représente, de manière indépendante, un groupe méthyle, 1 un groupe butyle ou un groupe phényle.

**5.** Composition de résine acrylique selon l'une quelconque des revendications 1 à 4, dans laquelle chacun de $R_1$ à $R_2$ dans ladite formule générale (1), représente, de manière indépendante, un groupe alkylène possédant 1 à 6 atomes de carbone.

**6.** Composition de résine acrylique selon l'une quelconque des revendications 1 à 5, dans laquelle « a » dans ladite formule générale (1) représente un nombre entier de 4 à 100.

**7.** Composition de résine acrylique selon l'une quelconque des revendications 1 à 6, dans laquelle ladite résine de polycarbonate aux extrémités modifiées a des motifs récurrents représentés par la formule générale (2) suivante :

[Formule chimique 2]

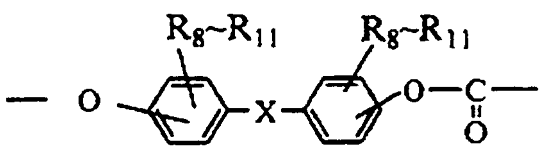

(2)

dans laquelle chacun de $R_8$ à $R_{11}$ représente, de manière indépendante, un atome d'hydrogène, un atome de fluor, un atome de chlore, un atome de brome, un atome d'iode, un groupe alkyle possédant 1 à 9 atomes de carbone, un groupe aryle possédant 6 à 12 atomes de carbone, un groupe alcényle possédant 2 à 5 atomes de carbone, un groupe alcoxy possédant 1 à 5 atomes de carbone ou un groupe aralkyle possédant 7 à 17 atomes de carbone, et « X » représente un groupe choisi dans le groupe constitué par les groupes organiques divalents suivants représentés par les formules suivantes :

[Formule chimique 3]

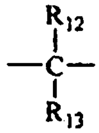 , $-S-$ , $-(CH_2)_b-$ , $-O-$ , $-SO-$ , $-CO-$ , $-SO_2-$ ,

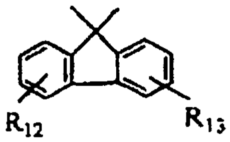 , 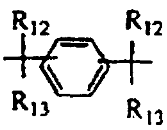 , 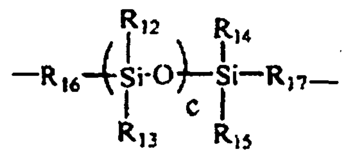

dans lesquelles chacun de $R_{12}$ à $R_{15}$ représente, de manière indépendante, un atome d'hydrogène, un atome de fluor, un atome de chlore, un atome de brome, un atome d'iode, un groupe alkyle possédant 1 à 9 atomes de carbone, un groupe alcoxy possédant 1 à 5 atomes de carbone, un groupe aryle possédant 6 à 12 atomes de carbone ou un groupe dans lequel $R_{12}$ à $R_{15}$ sont combinés les uns aux autres pour former un cycle carbocyclique ou un cycle hétérocyclique, chacun de $R_{16}$ à $R_{17}$ représente, de manière indépendante, un groupe alkylène possédant 1 à 20 atomes de carbone, « b » représente un nombre entier de 0 à 20 et « c » représente un nombre entier de 1 à 1 000.

**8.** Composition de résine acrylique selon la revendication 7, dans laquelle lesdits motifs récurrents représentés par la formule générale (2) sont dérivés du 2,2-bis(4-hydroxyphényl)propane, 1,1-bis(4-hydroxyphényl)cyclohexane, 1,1-bis(4-hydroxy-3-méthylphényl)cyclohexane, 2,2-bis(4-hydroxy-3-méthylphényl)propane, 1,1-bis(4-hydroxyphényl)éthane, bis(4-hydroxyphényl)méthane ou 1,1'-biphényl-4,4'-diol.

**9.** Composition de résine acrylique selon la revendication 7 ou 8, dans laquelle le degré moyen de polymérisation desdits motifs récurrents représentés par la formule générale (2) est de 7 à 200.

**10.** Composition de résine acrylique selon l'une quelconque des revendications 1 à 9, dans laquelle ladite résine acrylique est dérivée de monomères contenant comme composant principal un monomère acrylique choisi dans le groupe constitué par les acides acryliques, les acrylates et les méthacrylates.

**11.** Composition de résine acrylique selon la revendication 10, dans laquelle ladite résine acrylique est un copolymère de polyméthylméthacrylate.

**12.** Composition de résine acrylique selon l'une quelconque des revendications 1 à 11, **caractérisé en ce qu'**elle comprend en outre des amides d'acide gras et/ou des alcools supérieurs.

**13.** Produit moulé obtenu par moulage de la composition de résine acrylique selon l'une quelconque des revendications 1 à 12.

**14.** Produit moulé selon la revendication 13, qui est un film ou une feuille.

**15.** Stratifié multicouche comprenant au moins une couche formée de la composition de résine acrylique selon l'une quelconque des revendications 1 à 12 et une couche formée d'autres résines.

**16.** Stratifié multicouche selon la revendication 15, qui est un corps stratifié de résine de polycarbonate dans lequel une résine de polycarbonate est utilisée comme lesdites autres résines et une couche formée de ladite composition de résine acrylique est stratifiée sur un côté ou les deux côtés de la couche formée de ladite résine de polycarbonate.

**17.** Stratifié multicouche selon la revendication 15 ou 16, **caractérisé en ce qu'**il comprend en outre une couche de revêtement dur.

**18.** Procédé pour produire la composition de résine acrylique selon l'une quelconque des revendications 1 à 12, qui

comprend une étape de mélange d'un monomère acrylique avec une résine de polycarbonate aux extrémités modifiées possédant des groupes terminaux représentés par la formule générale (1) suivante, et par la suite une polymérisation dudit monomère acrylique par chauffage ou irradiation de lumière :

[Formule chimique 4]

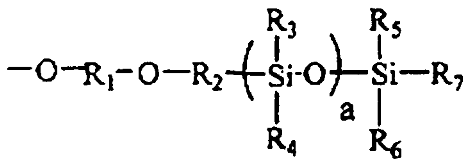

(1)

dans laquelle chacun de $R_1$ à $R_2$ représente, de manière indépendante, un groupe alkylène possédant 1 à 20 atomes de carbone, chacun de $R_3$ à $R_7$ représente, de manière indépendante, un atome d'hydrogène, un atome de fluor, un atome de chlore, un atome de brome, un atome d'iode, un groupe alkyle possédant 1 à 9 atomes de carbone, un groupe aryle possédant 6 à 12 atomes de carbone, un groupe alcényle possédant 2 à 5 atomes de carbone, un groupe alcoxy possédant 1 à 5 atomes de carbone ou un groupe aralkyle possédant 7 à 17 atomes de carbone, et « a » représente un nombre entier de 1 à 1 000.

**19.** Procédé pour produire un stratifié multicouche comprenant au moins une couche formée de la composition de résine acrylique selon l'une quelconque des revendications 1 à 12 et une couche formée d'autres résines, qui comprend une étape dans laquelle la résine formant la couche d'autres résines est moulée par moulage par co-extrusion avec ladite composition de résine acrylique.

**20.** Procédé pour produire un stratifié multicouche comprenant au moins une couche formée de la composition de résine acrylique selon l'une quelconque des revendications 1 à 12 et une couche formée d'autres résines, qui comprend une étape d'application sur la surface de la couche formée d'autres résines d'un mélange d'un monomère acrylique avec une résine de polycarbonate aux extrémités modifiées possédant des groupes terminaux représentés par la formule générale (1) suivante, et par la suite une polymérisation dudit monomère acrylique contenu dans le mélange par chauffage ou irradiation de lumière :

[Formule chimique 5]

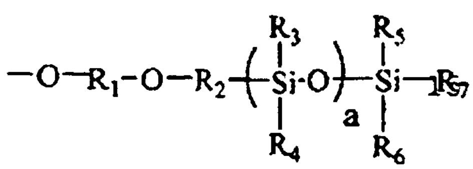

(1.)

dans laquelle chacun de $R_1$ à $R_2$ représente, de manière indépendante, un groupe alkylène possédant 1 à 20 atomes de carbone, chacun de $R_3$ à $R_7$ représente, de manière indépendante, un atome d'hydrogène, un atome de fluor, un atome de chlore, un atome de brome, un atome d'iode, un groupe alkyle possédant 1 à 9 atomes de carbone, un groupe aryle possédant 6 à 12 atomes de carbone, un groupe alcényle possédant 2 à 5 atomes de carbone, un groupe alcoxy possédant 1 à 5 atomes de carbone ou un groupe aralkyle possédant 7 à 17 atomes de carbone, et « a » représente un nombre entier de 1 à 1 000.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005225018 A
- JP 2006205478 A
- JP H05200827 B
- JP 2004130540 A